(19) Europäisches Patentamt
European Patent Office
Office européen des brevets

(11) EP 4 527 200 A1

(12) **EUROPEAN PATENT APPLICATION**
published in accordance with Art. 153(4) EPC

(43) Date of publication:
**26.03.2025 Bulletin 2025/13**

(21) Application number: **22949956.1**

(22) Date of filing: **25.07.2022**

(51) International Patent Classification (IPC):
***A01N 37/44*** (2006.01) ***A01N 43/653*** (2006.01)
***A01N 43/56*** (2006.01) ***A01N 43/36*** (2006.01)
***A01N 43/50*** (2006.01) ***A01N 43/54*** (2006.01)

(52) Cooperative Patent Classification (CPC):
**A01N 37/44; A01N 43/36; A01N 43/50; A01N 43/54; A01N 43/56; A01N 43/653**

(86) International application number:
**PCT/CN2022/107593**

(87) International publication number:
**WO 2024/007376 (11.01.2024 Gazette 2024/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.07.2022 CN 202210792944**
**08.07.2022 CN 202210805610**
**11.07.2022 CN 202210813382**

(71) Applicants:
- **Zhejiang Research Institute of Chemical Industry Co., Ltd.**
  **Hangzhou, Zhejiang 310023 (CN)**
- **Zhejiang University**
  **Hangzhou, Zhejiang 310058 (CN)**
- **Jiangsu Pesticide Research Institute Co., Ltd**
  **Nanjing, Jiangsu 210038 (CN)**

(72) Inventors:
- **WU, Ningjie**
  **Hangzhou, Zhejiang 310023 (CN)**
- **MA, Zhonghua**
  **Hangzhou, Zhejiang 310023 (CN)**
- **WANG, Honglei**
  **Hangzhou, Zhejiang 310023 (CN)**
- **XU, Tianming**
  **Hangzhou, Zhejiang 310023 (CN)**
- **CHEN, Yun**
  **Hangzhou, Zhejiang 310023 (CN)**
- **CAO, Yang**
  **Hangzhou, Zhejiang 310023 (CN)**
- **HU, Weiqun**
  **Hangzhou, Zhejiang 310023 (CN)**
- **PENG, Weili**
  **Hangzhou, Zhejiang 310023 (CN)**
- **WANG, Xiaoyang**
  **Hangzhou, Zhejiang 310023 (CN)**
- **ZHENG, Zhiwen**
  **Hangzhou, Zhejiang 310023 (CN)**
- **WEI, Youchang**
  **Hangzhou, Zhejiang 310023 (CN)**

(74) Representative: **LLR**
**2, rue Jean Lantier**
**75001 Paris (FR)**

# (54) FUNGICIDAL COMPOSITIONS AND USES THEREOF IN PREVENTION AND TREATMENT OF FUSARIUM DISEASES OF CROPS

(57) Disclosed are five fungicidal compositions and uses thereof in prevention and treatment of Fusarium diseases of crops, belonging to the technical field of plant disease prevention and treatment. The active ingredients of the compositions comprise a compound ZJS178 of formula (I) and a triazole fungicide, or a compound ZJS178 and a succinate dehydrogenase inhibitor fungicide, or a compound ZJS178 and a pyrrole fungicide, or a compound ZJS178 and an imidazole fungicide, or a compound ZJS178 and a strobilurin fungicide. The compositions of the present invention have a compounded synergistic effect and no cross-resistance, can significantly improve the fungicidal activity and efficacy, are beneficial for overcoming and delaying the resistance of pathogens, have good crop safety, and meet the requirements of pesticide quantity reduction and efficacy increase.

EP 4 527 200 A1

## Description

## Technical Field

The present invention relates to the technical field of plant disease prevention and treatment, in particular to five fungicidal compositions and uses thereof in prevention and treatment of *Fusarium* diseases of crops.

## Background Art

*Fusarium spp.* is a worldwide distribution of fungi, causing a variety of plant diseases such as root rot, stem rot, crown rot, flower rot, and ear rot, resulting in wilting and death of crops, and affecting yield and quality. Common Fusarium diseases include bakanal disease of rice, wheat head blight, ear rot of corn, fusarium wilt of cucurbits, root rot of various crops, etc.

In recent years, with the changes of climate and tillage methods, wheat head blight caused by *Fusarium graminearum* species complex seriously threatens the safety of wheat production. Unlike other crop diseases, *Fusarium graminearum* produces deoxynivalenol (DON), zearalenone (ZEA) and other mycotoxins on infected wheat, which seriously threatens human and animal safety. Therefore, the disease has been classified as "Class I Crop Disease and Pest" by the Ministry of Agriculture and Rural Affairs of the People' republic of China. In addition, due to the large-scale crop rotation of wheat and corn in China, ear rot of corn caused by *Fusarium graminearum* species complex has showed an aggravating trend, which has received high attention from the agricultural and grain procurement departments of major producing provinces.

In addition to *Fusarium graminearum,* bakanal disease of rice caused by *Fusarium fujikuroi* species complex is a worldwide fungal disease. In China, with the large-scale promotion of machine transplanting, seedling throwing, and other centralized seedling raising technologies, bakanal disease has become more and more common, with an incidence rate of 100 % in some areas, causing serious yield losses.

*Fusarium spp.* can also cause a variety of fruit and vegetable wilt diseases, for example, banana fusarium wilt caused by *Fusarium oxysporum* species complex has resulted in yellowing and death of banana leaves, causing severe losses to banana farmers and becoming a "cancer" of the banana industry. Moreover, fusarium wilts of cucurbits, tomatoes, and the like caused by *Fusarium oxysporum* species complex seriously restrict the healthy development of the industry.

Therefore, continuous and efficient prevention and treatment of *Fusarium* diseases is of great significance to ensure effective supply and quality safety of agricultural products in China.

Due to the lack of high-resistant varieties, chemical prevention and treatment is still the main method for the prevention and treatment of *Fusarium* diseases of crops.

At present, triazole fungicides have been widely used in the prevention and treatment of *Fusarium* diseases of crops. Triazole fungicides are sterol biosynthesis inhibitors, which inhibit the synthesis of pathogen ergosterol, resulting in changes in membrane-associated cell functions, and thus playing a role in inhibiting and killing fungi. For example, tebuconazole, chemical name: (RS)-1-p-chlorophenyl-4,4-dimethyl-3-(1H-1,2,4-triazol-1-yl methyl)pentan-3-ol, can be used to prevent and treat rust, head blight, powdery mildew, net blotch, root rot, and other crop diseases; metconazole, chemical name: 5-(4-chlorophenyl)-2,2-dimethyl-1-(1H-1,2,4-triazol-1-yl methyl)cyclopentanol, can be used to prevent and treat various diseases on cereal, wheat and legume crops, with good protective and treating properties, and a long service life. However, the long-term use of the reagent would result in resistance of *Fusarium spp.* thereto, which affects the efficacy of the reagent.

Succinate dehydrogenase inhibitor (SDHI) fungicides such as pydiflumetofen can be used to prevent and treat diseases such as fusarium head blight caused by *Fusarium* on cereals. Pydiflumetofen, chemical name: 3-(difluoromethyl)-N-methoxy-1-methyl-N-[(RS)-1-methyl-2-(2,4,6-trichlorophenyl)ethyl]pyrazol e-4-carboxamide, is a new generation succinate dehydrogenase inhibitor (SDHI) developed by Syngenta. Through the action on the respiratory chain complex II, it can prevent the synthesis of ATP, inhibit the growth of pathogens, and lead to their death, finally achieving the purpose of prevention and treatment of plant diseases. Penflufen, chemical name: 5-fluoro-1, 3-dimethyl-N-[2-(4-methylpentan-2-yl)phenyl]-1H-pyrazole-4-carboxamide, is an SDHI fungicide developed by Bayer. Through the action on the respiratory chain complex II, it inhibits ATP synthesis and has systemic, preventive and treating efficacies. At present, it is mainly used for seed treatment. After the seed treatment, the reagent permeates into the germinated seed and transmits to the whole plant through the xylem of the young plant, thereby playing a protective role. However, succinate dehydrogenase inhibitor fungicides have a single site of action, and as they are widely used, the risk of resistance continues to increase.

The pyrrole fungicide fludioxonil (chemical name: 4-(2,2-difluoro-1,3-benzodioxol-4-yl) pyrrole-3-carbonitrile) is commonly used to prevent and treat wheat crown rot, bakanal disease of rice, tomato fusarium wilt and other diseases. It mainly inhibits the growth of fungal mycelia by activating the histidine kinase signaling pathway. It can be used as a seed

treatment to prevent and treat many kinds of seed-borne and soil-borne pathogens, such as *Alternaria genus*, *Fusarium genus*, *Helminthosporium genus.*, *Rhizoctonia genus*, and *Penicillium genus.* However, existing studies have shown that pathogenic fungi can easily develop resistance to this reagent, significantly affecting the efficacy of the reagent (Oiki et al., 2022. Wide distribution of resistance to the fungicides fludioxonil and iprodione in Penicillium species. PLOS ONE 17 (1); Dowling et al., 2021. Characterization of high fludioxonil resistance in Botrytis cinerea isolates from calibrachoa flowers. Phytopathology, 111(3): pp.478-484; and Wen et al., 2022. Biological and molecular characterizations of field fludioxonil-resistant isolates of Fusarium graminearum. Pesticide biochemistry and physiology, 184: DOI10.1016/j.pestbp.2022.105101.).

Prochloraz, chemical name: N-propyl-N-[2-(2,4,6-trichlorophenoxy) ethyl]-imidazole-1-carboxamide, is a broad-spectrum fungicide and has an obvious preventive effect on diseases caused by *Ascomycete* and *Deuteromycete* in many crops. Carbendazim, chemical name: methyl benzimidazol-2-yl carbamate, a broad-spectrum systemic fungicide, mainly interferes with the mitotic process of cells and is effective against some pathogens of *Ascomycete* and most pathogenic fungi of *Deuteromycete.* Thiophanate-methyl, chemical name: 1,2-bis (3-carbomethoxy-2-thioureido)benzene, belonging to a broad-spectrum systemic low-toxic fungicide, has systemic conduction characteristics; this reagent acts on β-tubulin of pathogenic fungi, thereby inhibiting cell division of the pathogen and achieving the effect of inhibiting pathogen growth.

Azoxystrobin, chemical name: (E)-methyl 2-{2-[6-(2-cyanophenoxy)pyrimidin-4-yloxy]phenyl}-3-strobilurin, belonging to the strobilurin fungicides, inhibits the electron transfer between fungal cytochrome bc1, thereby inhibiting mitochondrial respiration and causing fungal cell death. This reagent has good efficacy on various crop diseases caused by *Ascomycotina*, *Basidiomycotina*, *Mastigomycotina*, and *Deuteromycotina.* It is high-efficiency, broad-spectrum, and has good activity against powdery mildew, rust, glume blotch, net blotch, downy mildew and rice blast of grains, rice, peanuts, grapes, potatoes, fruit trees, vegetables, coffee and lawns. It can be used for stem and leaf spraying, seed treatment and soil treatment. Trifloxystrobin, chemical name: (E)-methyl methoxyimino-{(E)-α-[1-(α,α,α-trifluoro-m-methyl)ethyliminooxy]o-tolyl}acetate,
broad-spectrum, long duration, has protective, treatment, and eradicative activity against most diseases caused by pathogenic fungi such as *Ascomycete*, *Basidiomycete*, *Oomycete* and *Deuteromycete.* There is no cross-resistance with existing fungicides. Fluoxastrobin, chemical name:
{2-]6-(2-chlorophenoxy)-3-fluoropyrimidin-4-yloxyphenyl}(5,6-dihydro-1,4,2-dioxazin-3-yl)met hanone o-methyloxime, with a broad spectrum of fungicidal activity, has good activity against almost all fungi (*Ascomycete*, *Basidiomycete*, *Oomycete* and *Deuteromycete*) diseases, such as rust, glume, net blotch, powdery mildew, downy mildew, etc. Picoxystrobin, chemical name: (E)-methyl 3-methoxy-2-{2-[6-(trifluoromethyl)-2-pyridinoxymethyl]phenyl}acrylate, belongs to broad-spectrum systemic fungicides. Pyraclostrobin, chemical name: methyl N-[2-[[1-(4-chlorophenyl) pyrazol-3-yl]oxymethyl] phenyl]-N-methoxycarbamate has a wide range of applications due to its protective effect, treating effect, systemic conductivity and rain erosion resistance. Fenaminstrobin, chemical name: (E,E,E)-N-methyl-2-[((((1-methyl-3-(2,6-dichlorophenyl)-2-propenyl)imino)oxy)methyl)phenyl]-2-methoxyiminoacetamide, with a broad spectrum of fungicidal activity and high activity, has preventive and treating effects on a variety of plant diseases caused by *Flagellum*, *Zygomycota*, *Ascomycete*, *Basidiomycete* and *Deuteromycete,* with excellent efficacies on powdery mildew and rust.

As a result of the long-term use of the reagents, the pathogens easily develop resistance to the above-mentioned reagents, affecting the efficacy of the reagents. Therefore, it is very important to develop a suitable reagent combination for the prevention and treatment of *Fusarium* diseases.

## Summary of the Invention

It is an object of the present invention to provide a highly efficient, less toxic, and environmentally friendly fungicidal composition having specific efficacy against crop diseases caused by *Fusarium spp.*, while delaying the resistance to the reagent and extending the service life of the reagent.

To achieve the above objectives, the present invention adopts the following technical solutions:

In a first aspect of the present invention, provided is a fungicidal composition, comprising as active ingredients a compound ZJS178 of formula (I) and a triazole fungicide,

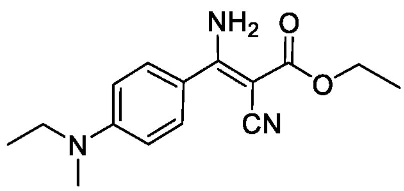

(I).

The above-mentioned compound ZJS178 is a new compound previously prepared by the research group of the

present invention and has a chemical name of ethyl 2-cyano-3-amino-3-[4-(N-ethyl-N-methylamino)phenyl]acrylate, and the synthetic route thereof is as follows:

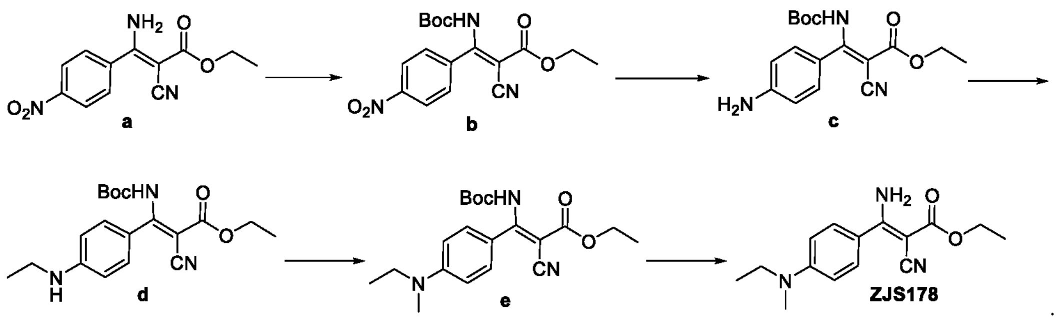

This compound is a cyanoacrylate fungicidal compound that acts on Type I myosin (motor protein) of *Fusarium spp.,* depriving the pathogens of their growth and causing their death. Research has shown that the compound ZJS178 has a novel structure and a unique mode of action, with no cross-resistance to triazole reagents. It is effective against diseases caused by *Fusarium spp.* and has protective and treating effects.

Due to their different mechanisms of action, the compound ZJS178 and triazole fungicides are compounded in the present invention, resulting in significantly higher efficacy in preventing *Fusarium* diseases of crops than single reagents. The composition can reduce the dosage of single reagents, help delay the development of fungicidal resistance, prolong the service life of fungicides, and reduce costs.

Preferably, in the composition, a mass ratio of the compound ZJS178 to the triazole fungicide is from 50:1 to 1:50.

Such triazole fungicides include, but are not limited to: tebuconazole, metconazole, myclobutanil, difenoconazole, triadimefon, epoxiconazole, diniconazole, prothioconazole, propiconazole, etc. Preferably, the triazole fungicide is tebuconazole or metconazole.

Further preferably, the mass ratio of the compound ZJS178 to the triazole fungicide in the composition is from 15:1 to 1:15.

The results show that the compounding of the compound ZJS178 and the triazole fungicide in a certain ratio has a synergistic effect against Fusarium diseases. For example, in the case of *Fusarium oxysporum* species complex, there is a synergistic effect when the compound ZJS178 is compounded with the triazole fungicide in a mass ratio of 8:1 to 1:8. In the case of *Fusarium fujikuroi*, there is a synergistic effect when the compound ZJS178 is compounded with the triazole fungicide in a mass ratio of 4:1 to 1:5 on the inhibition of metconazole-sensitive *Fusarium fujikuroi*, and there is a synergistic effect when the two are compounded in a mass ratio of 5:1 to 1:3 on the inhibition of metconazole-resistant *Fusarium fujikuroi.* In the case of *Fusarium graminearum,* there is a synergistic effect when the compound ZJS178 is compounded with the triazole fungicide in a mass ratio of 3:1 to 1:3 on the inhibition of tebuconazole-sensitive *Fusarium graminearum,* and there is a synergistic effect when the two are compounded in a mass ratio of 2:1 to 1:3 on the inhibition of tebuconazole-resistant *Fusarium graminearum.*

Preferably, the mass ratio of the compound ZJS178 to the triazole fungicide in the composition is from 8: 1 to 1: 8.

More preferably, the compound ZJS178 is compounded with the triazole fungicide in a mass ratio of 2:1 to 1:3.

Further, the fungicidal composition further comprises auxiliary ingredients required for pesticide formulations, and the mass proportion of active ingredients in the composition is 1-90 %. The auxiliary ingredients are commonly-used carriers and adjuvants in pesticides.

Preferably, the mass percentage of active ingredients is 15-40 %.

According to the methods well known to those skilled in the art, the fungicidal composition of the present invention can be formulated into various agriculturally-acceptable formulations in practical use, including a water dispersible granule, a suspension, an emulsion in water, a microemulsion, and a seed treatment suspension.

For the water dispersible granule formulation, a person skilled in the art can use a corresponding adjuvant to complete the present invention. The dispersant can be selected from polycarboxylates, lignosulfonates and alkyl naphthalene sulfonates; the wetting agent can be selected from alkyl sulfates, alkyl sulfonates and naphthalene sulfonates; the disintegrant can be selected from ammonium sulfate, urea, sucrose and glucose; the binder can be selected from diatomite, corn starch, polyvinyl alcohol and carboxymethyl (ethyl) cellulose; and the filler can be selected from diatomite, kaolin, white carbon black, light calcium, talc, attapulgite and china clay.

The adjuvants that can be used in the suspension formulation: the dispersant can be selected from polycarboxylates, lignosulfonates, and alkyl naphthalene sulfonates; the wetting agent can be selected from alkylphenol polyoxyethylene polyether formaldehyde condensate sulfates, alkylphenol polyoxyethylene ether phosphates, phenethylphenol polyoxyethylene ether phosphates, alkyl sulfates, alkyl sulfonates, and naphthalene sulfonates; the thickener can be selected from xanthan gum, polyvinyl alcohol and bentonite; the preservative can be selected from formaldehyde, benzoic

acid, and sodium benzoate; the defoamer is a silicone defoamer; and the antifreeze can be selected from ethylene glycol, propylene glycol, glycerol, urea and inorganic salts such as sodium chloride.

The adjuvants that can be used in the emulsion in water formulation: the emulsifier can be selected from nonylphenol polyoxyethylene ether phosphates, triethylphenol polyoxyethylene ether phosphates (agricultural emulsifier 600# phosphate), agricultural emulsifier 700#, agricultural emulsifier 2201#, span-60#, emulsifier T-60, surfactant TX-10, agricultural emulsifier 1601#, agricultural emulsifier 600#, and agricultural emulsifier 400#; the solvent is selected from xylene, toluene, cyclohexanone, and mineral spirits (S-150, S-180 and S-200); the stabilizer can be selected from triphenyl phosphite, epichlorohydrin, and acetic anhydride; the thickener can be selected from xanthan gum, polyvinyl alcohol, bentonite, and magnesium aluminum silicate; and the preservatives can be selected from methanol, benzoic acid, and sodium benzoate.

The adjuvants that can be used in the microemulsion formulation: the emulsifier can be selected from calcium dodecylbenzene sulfonate (agricultural emulsifier 500#), agricultural emulsifier 700#, agricultural emulsifier 2201#, span-60#, tween-80-60#, TX-10, agricultural emulsifier 1601, agricultural emulsifier 600#, agricultural emulsifier 400#; the co-emulsifier can be selected from methanol, isopropanol, n-butanol and ethanol; the solvent can be selected from cyclohexanone, N-methylpyrrolidone, xylene, toluene and mineral spirits (S-150, S-180, and S-200); and the stabilizer can be selected from triphenyl phosphite and epichlorohydrin.

The adjuvants that can be used in the seed treatment suspension: the film-forming agent may be polyethylene glycol, polyvinyl alcohol resin, polyvinyl pyrrolidone, hydroxyethyl cellulose, poly(vinyl acetate), sodium carboxymethyl cellulose, gum arabic, gelatin, polyvinyl alcohol, polyacrylamide, or mixtures thereof. The skilled person can adjust the proportion of poly(vinyl acetate) according to the desired viscosity of the product.

The present invention also provides a use of the fungicidal composition in the prevention and treatment of crop diseases caused by *Fusarium spp.*

Further, the *Fusarium spp.* refers to phytopathogenic fusarium, mainly including *Fusarium graminearum* species complex, *Fusarium fujikuroi* species complex, *Fusarium oxysporum* species complex and *Fusarium moniliforme,* etc.

Further, the crop diseases comprise wheat head blight, bakanal disease of rice, and strawberry fusarium wilt.

Specifically, in the use of preventing and treating wheat head blight, the fungicidal composition is applied at the early stage of heading and flowering of wheat at intervals of 6-7 days.

In a second aspect of the present invention, provided is a highly efficient fungicidal composition, comprising as active ingredients a compound ZJS178 of formula (I) and a succinate dehydrogenase inhibitor fungicide,

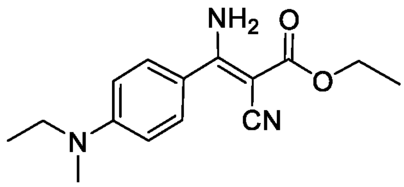

(I).

The above-mentioned compound ZJS178 is a new compound previously prepared by the research group of the present invention and has a chemical name of ethyl 2-cyano-3-amino-3-[4-(N-ethyl-N-methylamino)phenyl]acrylate, and the synthetic route thereof is as follows:

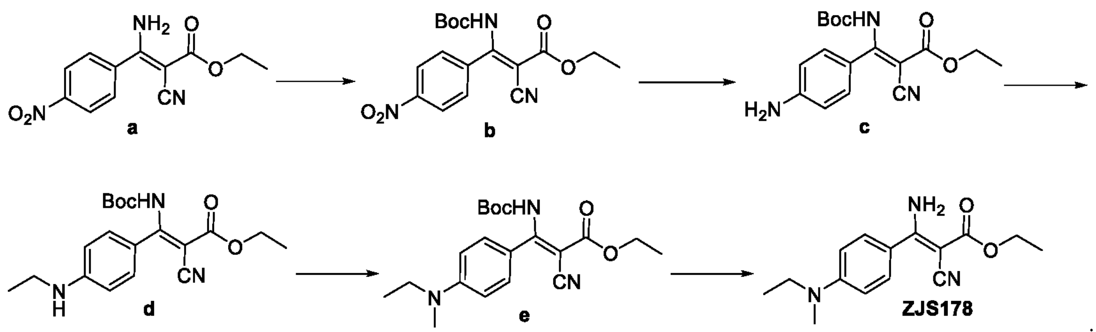

a b c d e ZJS178

This compound is a cyanoacrylate fungicidal compound, which acts on Type I myosin (motor protein) of *Fusarium spp.* Type I myosin, as the motor protein of pathogens, can hydrolyze ATP, convert biological energy into mechanical energy, and provide power for biological activities such as growth, infection and toxin synthesis of pathogens. The compound ZJS178 specifically acts on Type I myosin (motor protein) of *Fusarium spp.,* depriving the pathogens of their growth and causing their death.

The compound ZJS178 has a novel structure and a unique mode of action. Studies have shown that the compound ZJS178 has no cross-resistance to succinate dehydrogenase inhibitors (SDHI). It is effective against diseases caused by *Fusarium spp.* and has protective and treating effects.

Due to the different mechanisms of action between the compound ZJS178 and SDHI fungicides, but their binding sites are related, the present invention compounds the two to significantly enhancing the fungicidal effect, delay fungicidal resistance, and reduce prevention and treatment costs. Specifically, the SDHI fungicides can effectively inhibit the synthesis of ATP of pathogens, and rationally compounding the compound ZJS178 with the SDHI reagent can simultaneously block the synthesis of ATP and the activity of the motor protein, which is equivalent to simultaneously blocking the "gasoline" and "engine" of pathogens, so as to achieve efficient inhibition of pathogen growth and delay the development of resistance of pathogens to any of these reagents.

Preferably, a mass ratio of the compound ZJS178 to the succinate dehydrogenase inhibitor fungicide in the composition is from 50: 1 to 1: 50.

Such succinate dehydrogenase inhibitor fungicides include but are not limited to pydiflumetofen, penflufen, fluxapyroxad, fluopyram, carboxin and the like.

Preferably, the mass ratio of the compound ZJS178 to the succinate dehydrogenase inhibitor fungicide in the composition is from 9: 1 to 1: 9.

The results show that the compounding of the compound ZJS178 and the succinate dehydrogenase inhibitor in a certain ratio has a synergistic effect against *Fusarium* diseases. When the mass ratio of the compound ZJS178 to the succinate dehydrogenase inhibitor fungicides is from 7:1 to 1:5, it has a synergistic effect on the inhibition of *Fusarium graminearum* and *Fusarium fujikuroi.*

Further, the highly efficient fungicidal composition further comprises a pesticide-acceptable carrier and adjuvant. The mass percentage of the active ingredients in the composition is 1-90 %.

Preferably, the mass percentage of the active ingredients in the composition is 10-40 %.

According to the methods well known to those skilled in the art, the fungicidal composition of the present invention can be formulated into various agriculturally-acceptable formulations in practical use, and the usual formulations include a water dispersible granule, a suspension, a microemulsion, an emulsion in water, a suspoemulsion, and a seed treatment suspension.

For the water dispersible granule formulation, a person skilled in the art can use a corresponding adjuvant to complete the present invention. The dispersant can be selected from polycarboxylates, lignosulfonates and alkyl naphthalene sulfonates; the wetting agent can be selected from alkyl sulfates, alkyl sulfonates and naphthalene sulfonates; the disintegrant can be selected from ammonium sulfate, urea, sucrose and glucose; the binder can be selected from diatomite, corn starch, polyvinyl alcohol and carboxymethyl (ethyl) cellulose; and the filler can be selected from diatomite, kaolin, white carbon black, light calcium, talc, attapulgite and china clay.

The adjuvants that can be used in the suspension formulation: the dispersant can be selected from polycarboxylates, lignosulfonates, and alkyl naphthalene sulfonates; the wetting agent can be selected from alkylphenol polyoxyethylene polyether formaldehyde condensate sulfates, alkylphenol polyoxyethylene ether phosphates, phenethylphenol polyoxyethylene ether phosphates, alkyl sulfates, alkyl sulfonates, and naphthalene sulfonates; the thickener can be selected from xanthan gum, polyvinyl alcohol and bentonite; the preservative can be selected from formaldehyde, benzoic acid, and sodium benzoate; the defoamer is a silicone defoamer; and the antifreeze can be selected from ethylene glycol, propylene glycol, glycerol, urea and inorganic salts such as sodium chloride.

The adjuvants that can be used in the emulsion in water formulation: the emulsifier can be selected from nonylphenol polyoxyethylene ether phosphates, triethylphenol polyoxyethylene ether phosphates (agricultural emulsifier 600# phosphate), agricultural emulsifier 700#, agricultural emulsifier 2201#, span-60#, emulsifier T-60, surfactant TX-10, agricultural emulsifier 1601#, agricultural emulsifier 600#, and agricultural emulsifier 400#; the solvent is selected from xylene, toluene, cyclohexanone, and mineral spirits (S-150, S-180 and S-200); the stabilizer can be selected from triphenyl phosphite, epichlorohydrin, and acetic anhydride; the thickener can be selected from xanthan gum, polyvinyl alcohol, bentonite, and magnesium aluminum silicate; and the preservatives can be selected from methanol, benzoic acid, and sodium benzoate.

The adjuvants that can be used in the microemulsion formulation: the emulsifier can be selected from calcium dodecylbenzene sulfonate (agricultural emulsifier 500#), agricultural emulsifier 700#, agricultural emulsifier 2201#, span-60#, tween-80-60#, TX-10, agricultural emulsifier 1601, agricultural emulsifier 600#, agricultural emulsifier 400#; the co-emulsifier can be selected from methanol, isopropanol, n-butanol and ethanol; the solvent can be selected from cyclohexanone, N-methylpyrrolidone, xylene, toluene and mineral spirits (S-150, S-180, and S-200); and the stabilizer can be selected from triphenyl phosphite and epichlorohydrin.

The adjuvants that can be used in the seed treatment suspension: the film-forming agent may be polyethylene glycol, polyvinyl alcohol resin, polyvinyl pyrrolidone, hydroxyethyl cellulose, poly(vinyl acetate), sodium carboxymethyl cellulose, gum arabic, gelatin, polyvinyl alcohol, polyacrylamide, or mixtures thereof. The skilled person can adjust the proportion of poly(vinyl acetate) according to the desired viscosity of the product.

The present invention also provides a use of the highly efficient fungicidal composition in the prevention and treatment of crop diseases caused by *Fusarium spp.*

Further, the *Fusarium spp.* refers to phytopathogenic fusarium, mainly including *Fusarium graminearum* species complex, *Fusarium fujikuroi* species complex, *Fusarium oxysporum* species complex and *Fusarium moniliforme,* etc.

Further, the crop diseases caused by *Fusarium spp.* include but are not limited to wheat head blight and bakanal disease of rice.

Specifically, to prevent and treat wheat head blight, the compounding of the compound ZJS178 with pydiflumetofen is applied once during the early stage of heading and flowering of wheat, and then applied again after a 6-day interval. The reagent obtained by compounding the compound ZJS178 and penflufen is used as a seed treatment for prevention and treatment of crop diseases.

In a third aspect of the present invention, provided is a fungicide composition, comprising as active ingredients a compound ZJS178 of formula (I) and a pyrrole fungicide,

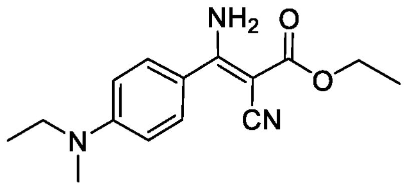

(I).

The above-mentioned compound ZJS178 is a new compound previously prepared by the research group of the present invention and has a chemical name of ethyl 2-cyano-3-amino-3-[4-(N-ethyl-N-methylamino)phenyl]acrylate, and the synthetic route thereof is as follows:

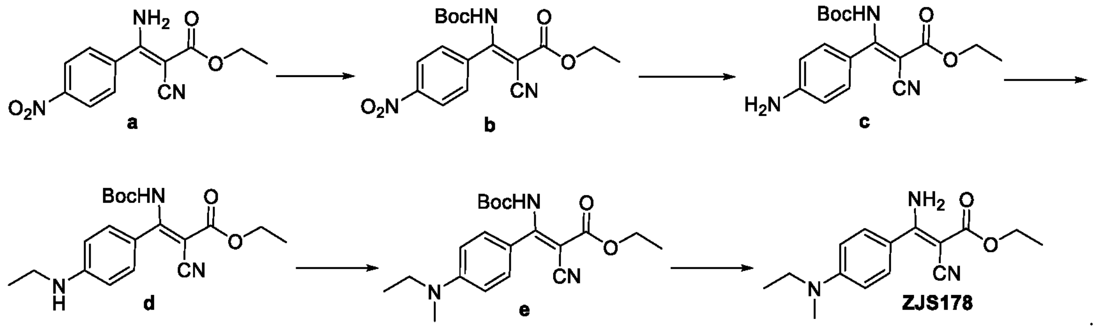

This compound is a cyanoacrylate fungicidal compound that acts on Type I myosin (motor protein) of *Fusarium spp.,* depriving the pathogens of their growth and causing their death.

The compound ZJS178 has a novel structure and a unique mode of action, and has no cross-resistance to pyrrole reagents such as fludioxonil. Due to the different mechanism of action between the compound ZJS178 and pyrrole fungicides, the present invention can not only expand the fungicidal scope and enhance the fungicidal efficacy, but also delay the development of drug resistance.

Preferably, the composition comprises the compound ZJS178 and the pyrrole fungicide in a mass ratio of from 50: 1 to 1: 50.

Such pyrrole fungicides include, but are not limited to, fludioxonil, fenpiclonil, and the like. Further preferably, the mass ratio of the compound ZJS178 to the pyrrole fungicide is from 11:1 to 1:11.

The results show that the compounding of the compound ZJS178 and the pyrrole fungicide in a certain ratio has a synergistic effect on the inhibition of *Fusarium* diseases. Specifically, in the case of *Fusarium pseudograminearum,* the compounding of the compound ZJS178 and the pyrrole fungicide in a mass ratio of 3: 1 to 1: 2 has a synergistic effect on the inhibition of fludioxonil-resistant *Fusarium pseudograminearum,* and has a synergistic effect on the inhibition of fludioxonil-senstive *Fusarium pseudograminearum* in a mass ratio of 1: 2 to 3; in the case of *Fusarium fujikuroi,* the compounding of the compound ZJS178 and the pyrrole fungicide in the mass ratio of 1: 1 to 2 has a synergistic effect; in the case of *Fusarium oxysporum* species complex, the compounding of the compound ZJS178 and the pyrrole fungicide in a mass ratio of 1: 1 to 3 has a synergistic effect.

Preferably, the mass ratio of the compound ZJS178 to the pyrrole fungicide in the fungicide composition is from 1:1-3.

Further, the composition also includes, in addition to the active ingredients described above, a pesticide-acceptable carrier and adjuvant. Wherein, the mass percentage of the active ingredients is 1-90 %.

Preferably, the mass percentage of the active ingredients in the composition is 25-40 %.

According to the methods well known to those skilled in the art, the fungicide composition of the present invention can be formulated into various formulations which are agriculturally acceptable in practical use, and the preferable formulation formulations can be a seed treatment suspension, a water dispersible granule, a microemulsion, and an emulsion in water.

For the seed treatment suspension, the person skilled in the art is familiar with the use of a corresponding adjuvant to complete the present invention. The adjuvants that can be used for the seed treatment suspension: the film-forming agent may be polyethylene glycol, polyvinyl alcohol resin, polyvinyl pyrrolidone, hydroxyethyl cellulose, poly(vinyl acetate), sodium carboxymethyl cellulose, gum arabic, gelatin, polyvinyl alcohol, polyacrylamide, or mixtures thereof. The skilled person can adjust the proportion of poly(vinyl acetate) according to the desired viscosity of the product.

For the water dispersible granule formulation, the dispersant is selected from polycarboxylate, lignosulfonate and alkyl naphthalene sulfonate; the wetting agent is selected from alkyl sulfates, alkyl sulfonates and naphthalene sulfonates; the disintegrant is selected from ammonium sulfate, urea, sucrose and glucose; the binder is selected from diatomite, corn starch, polyvinyl alcohol and carboxymethyl (ethyl) cellulose; and the filler is selected from diatomite, kaolin, white carbon black, light calcium, talc, attapulgite and china clay.

The adjuvants that can be used in the emulsion in water formulation: the emulsifier can be selected from nonylphenol polyoxyethylene ether phosphates, triethylphenol polyoxyethylene ether phosphates (agricultural emulsifier 600# phosphate), agricultural emulsifier 700#, agricultural emulsifier 2201#, span-60#, emulsifier T-60, surfactant TX-10, agricultural emulsifier 1601#, agricultural emulsifier 600#, and agricultural emulsifier 400#; the solvent is selected from xylene, toluene, cyclohexanone, and mineral spirits (S-150, S-180 and S-200); the stabilizer can be selected from triphenyl phosphite, epichlorohydrin, and acetic anhydride; the thickener can be selected from xanthan gum, polyvinyl alcohol, bentonite, and magnesium aluminum silicate; and the preservatives can be selected from methanol, benzoic acid, and sodium benzoate.

The adjuvants that can be used in the microemulsion formulation: the emulsifier can be selected from calcium dodecylbenzene sulfonate (agricultural emulsifier 500#), agricultural emulsifier 700#, agricultural emulsifier 2201#, span-60#, tween-80-60#, TX-10, agricultural emulsifier 1601, agricultural emulsifier 600#, agricultural emulsifier 400#; the co-emulsifier can be selected from methanol, isopropanol, n-butanol and ethanol; the solvent can be selected from cyclohexanone, N-methylpyrrolidone, xylene, toluene and mineral spirits (Item No.: S-150, S-180, and S-200); and the stabilizer can be selected from triphenyl phosphite and epichlorohydrin.

The present invention also provides a use of the fungicide composition in the prevention and treatment of crop diseases caused by *Fusarium spp.*

Further, the *Fusarium spp.* refers to phytopathogenic fusarium, mainly including *Fusarium pseudograminearum*, *Fusarium fujikuroi*, *Fusarium oxysporum* and the like.

Such crop diseases include, but are not limited to: wheat stem rot, bakanal disease of rice, and tomato fusarium wilt.

Further, the use comprises treating crop seeds with a seed treatment prepared from the fungicide composition.

In a fourth aspect of the present invention, provided is a fungicidal composition, comprising a compound ZJS178 of formula (I) and an imidazole fungicide,

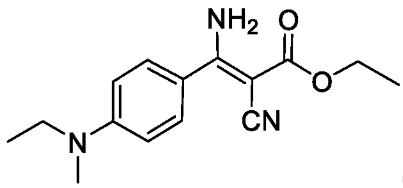

(I).

The above-mentioned compound ZJS178 is a new compound previously prepared by the research group of the present invention and has a chemical name of ethyl 2-cyano-3-amino-3-[4-(N-ethyl-N-methylamino)phenyl]acrylate, and the synthetic route thereof is as follows:

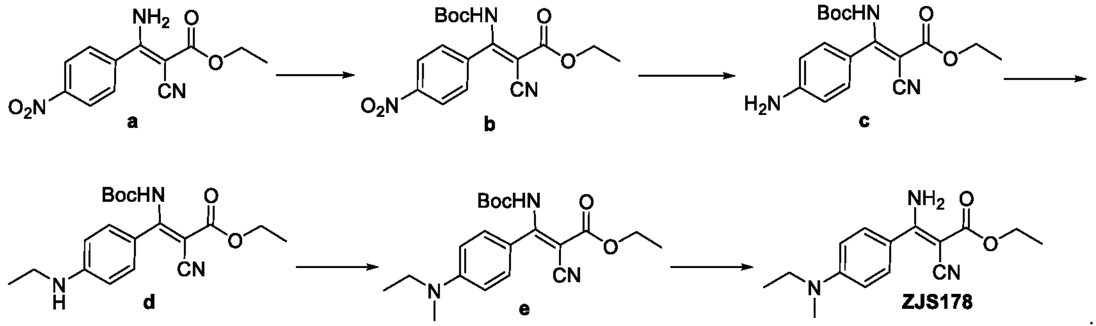

a b c d e ZJS178

This compound is a cyanoacrylate fungicidal compound that acts on Type I myosin (motor protein) of *Fusarium spp.,* depriving the pathogens of their growth and causing their death. The compound ZJS178 has a novel structure and a unique mode of action, and has no cross-resistance to imidazole fungicides.

Preferably, a mass ratio of the compound ZJS178 to the imidazole fungicide in the composition is from 60: 1 to 1: 60.

The imidazole fungicide includes, but are not limited to: prochloraz, carbendazim, prochloraz-manganese chloride complex, thiophanate-methyl and the like.

It is further preferred that the mass ratio of the compound ZJS178 to the imidazole fungicide in the composition is from 20: 1 to 1: 20.

Further preferably, the composition has a mass ratio of the compound ZJS178 to the imidazole fungicide in the composition is from 12: 1 to 1:12.

Still further preferably, the composition has a mass ratio of the compound ZJS178 to the imidazole fungicide in the composition is from 6: 1 to 1: 6.

Most preferably, the composition has a mass ratio of the compound ZJS178 to the imidazole fungicide in the composition is from 3: 1 to 1: 3.

The composition provided herein is suitable for sterilization, particularly for agricultural sterilization.

Preferably, the composition provided herein is suitable for preventing and treating diseases caused by *Fusarium spp.*

Further preferably, the *Fusarium spp.* refers to phytopathogenic fusarium, mainly including *Fusarium graminearum* species complex, *Fusarium fujikuroi* species complex, *Fusarium oxysporum* species complex and *Fusarium moniliforme,* etc.

Still more preferably, crop diseases caused by *Fusarium spp.* include, but are not limited to fusarium wilt of cucurbits, tomato fusarium wilt, banana fusarium wilt, cotton fusarium wilt, strawberry fusarium wilt, bakanal disease of rice, and wheat head blight, and the like.

The present invention provides a fungicidal composition containing 0.5-90 % by weight of the active ingredients.

It is further preferred that the fungicidal composition comprises 5-80 % by weight of the active ingredients.

The fungicide provided by the present invention may further include an agriculture-acceptable carrier and adjuvant, in addition to the aforementioned composition.

Due to the different mechanism of action, the compound ZJS178 and the imidazole fungicide are compounded in the present invention, resulting in significantly higher efficacy in preventing crop diseases caused by *Fusarium spp.* than single reagents. This reduces the dosage of single reagents, helps delay the development of fungicidal resistance, and prolongs the service life of fungicides.

The results show that the compounding of the compound ZJS178 and the imidazole fungicide in a certain ratio has a synergistic effect on the inhibition of the growth of *Fusarium spp.* For example, the compounding of the compound ZJS178 and thiophanate-methyl in a mass ratio of 3: 1 to 1: 3 has a significant synergistic effect on the inhibition of the growth of *Fusarium oxysporum.*

Further, the fungicide further comprises auxiliary ingredients required for pesticide formulations, and the mass percentage of the active ingredients in the composition is 0.5-90 %. The auxiliary ingredients are commonly used carriers and adjuvants in pesticides.

According to the methods well known to those skilled in the art, the fungicidal composition of the present invention can be formulated into various agriculturally-acceptable formulations in practical use, including a water dispersible granule, a suspension, and a seed treatment suspension. For the water dispersible granule formulation, polycarboxylate, lignosulfonate and alkyl naphthalene sulfonate can be selected as a dispersant; the wetting agent is selected from alkyl sulfates, alkyl sulfonates and naphthalene sulfonates; the disintegrant is selected from ammonium sulfate, urea, sucrose and glucose; diatomite, corn starch, polyvinyl alcohol and carboxymethyl cellulose are selected as a binder; and the filler is selected from diatomite, kaolin, white carbon black, light calcium, talc, attapulgite and china clay, etc.

For adjuvants that can be used in the suspension formulation, the dispersant can be selected from polycarboxylates, lignosulfonates, and alkyl naphthalene sulfonates; the wetting agent can be selected from alkylphenol polyoxyethylene polyether formaldehyde condensate sulfates, alkylphenol polyoxyethylene ether phosphates, phenethylphenol polyoxyethylene ether phosphates, alkyl sulfates, alkyl sulfonates, and naphthalene sulfonates; the thickener can be selected from xanthan gum, polyvinyl alcohol and bentonite; the preservative can be selected from formaldehyde, benzoic acid, and sodium benzoate; the defoamer is a silicone defoamer; and the antifreeze can be selected from ethylene glycol, propylene glycol, glycerol, urea and inorganic salts such as sodium chloride.

For adjuvants that can be used for the seed treatment suspension, the film-forming agent may be polyethylene glycol, polyvinyl alcohol resin, polyvinyl pyrrolidone, hydroxyethyl cellulose, poly(vinyl acetate), sodium carboxymethyl cellulose, gum arabic, gelatin, polyvinyl alcohol, polyacrylamide, or mixtures thereof. The skilled person can adjust the proportion of poly(vinyl acetate) according to the desired viscosity of the product.

In a fifth aspect of the present invention, provided is a fungicidal composition, comprising a compound ZJS178 of formula (I) and a strobilurin fungicide,

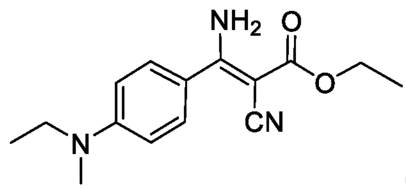

(I).

The above-mentioned compound ZJS178 is a new compound previously prepared by the research group of the present invention and has a chemical name of ethyl 2-cyano-3-amino-3-[4-(N-ethyl-N-methylamino)phenyl]acrylate, and the synthetic route thereof is as follows:

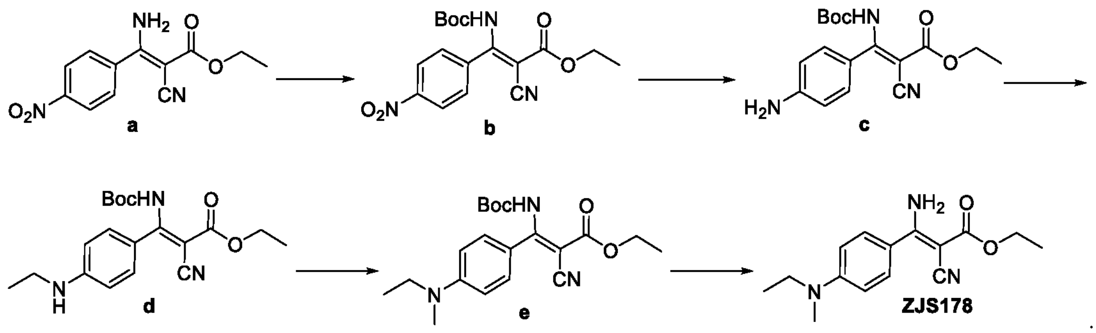

This compound is a cyanoacrylate fungicidal compound that acts on Type I myosin (motor protein) of *Fusarium spp.,* depriving the pathogens of their growth and causing their death. The compound ZJS178 has a novel structure and a unique mode of action with no cross-resistance to strobilurin fungicides.

Preferably, a mass ratio of the compound ZJS178 to the strobilurin fungicide is from 60:1 to 1:60. The strobilurin fungicide includes but is not limited to azoxystrobin, trifloxystrobin, fluoxastrobin, picoxystrobin, pyraclostrobin, bemystrobin, fenaminstrobin, and the like.

Further preferably, the mass ratio of the compound ZJS178 to the strobilurin fungicide is from 20:1 to 1:20.

Still further preferably, the mass ratio of the compound ZJS178 to the strobilurin fungicide is from 12:1 to 1:12.

Yet still further preferably, the mass ratio of the compound ZJS178 to the strobilurin fungicide is from 6:1 to 1:6.

Most preferably, the mass ratio of the compound ZJS178 to the strobilurin fungicide is from 3:1 to 1:3.

The composition provided herein is suitable for sterilization, particularly for agricultural sterilization.

Preferably, the composition provided herein is suitable for preventing and treating diseases caused by *Fusarium spp.*

Further preferably, the *Fusarium spp.* refers to phytopathogenic fusarium, mainly including *Fusarium graminearum* species complex, *Fusarium fujikuroi* species complex, *Fusarium oxysporum* species complex and *Fusarium moniliforme,* etc.

Even more preferably, the composition provided by the present invention is used for preventing and treating diseases such as fusarium wilt of cucurbits, tomato fusarium wilt, banana fusarium wilt, cotton fusarium wilt, strawberry fusarium wilt, bakanal disease of rice, and wheat head blight, and the like.

The present invention provides a fungicidal composition containing 0.5-90 % by weight of the active ingredients.

It is further preferred that the fungicidal composition comprises 5-80 % by weight of the active ingredients.

The composition provided by the present invention may further include an agriculture-acceptable carrier and adjuvant, in addition to the aforementioned composition.

Due to the different mechanism of action, the compound ZJS178 and the strobilurin fungicide are compounded in the present invention, resulting in significantly higher efficacy in preventing crop diseases caused by *Fusarium spp.* than single reagents. This reduces the dosage of single reagents, helps delay the development of fungicidal resistance, and prolongs the service life of fungicides.

The results show that the compounding of the compound ZJS178 and the strobilurin fungicide in a certain ratio has a synergistic effect on the inhibition of the growth of *Fusarium spp.* For example, the compounding of the compound ZJS178 and azoxystrobin in a mass ratio of 3: 1 to 1: 1 has an obvious synergistic effect on the inhibition of the growth of *Fusarium oxysporum.*

Further, the fungicidal composition further comprises auxiliary ingredients required for pesticide formulations, and the mass proportion of active ingredients in the composition is 0.5-90 %. The auxiliary ingredients are commonly used carriers and adjuvants in pesticides.

According to the methods well known to those skilled in the art, the fungicidal composition of the present invention can be formulated into various agriculturally acceptable formulations in practical use, including a water dispersible granule, a suspension, and a seed treatment suspension.

For the water dispersible granule formulation, polycarboxylate, lignosulfonate and alkyl naphthalene sulfonate can be selected as a dispersant; the wetting agent is selected from alkyl sulfates, alkyl sulfonates and naphthalene sulfonates; the disintegrant is selected from ammonium sulfate, urea, sucrose and glucose; diatomite, corn starch, polyvinyl alcohol and carboxymethyl cellulose are selected as a binder; and the filler is selected from diatomite, kaolin, white carbon black, light calcium, talc, attapulgite and china clay, etc.

For adjuvants that can be used in the suspension formulation, the dispersant can be selected from polycarboxylates, lignosulfonates, and alkyl naphthalene sulfonates; the wetting agent can be selected from alkylphenol polyoxyethylene polyether formaldehyde condensate sulfates, alkylphenol polyoxyethylene ether phosphates, phenethylphenol polyoxyethylene ether phosphates, alkyl sulfates, alkyl sulfonates, and naphthalene sulfonates; the thickener can be selected from xanthan gum, polyvinyl alcohol and bentonite; the preservative can be selected from formaldehyde, benzoic acid, and sodium benzoate; the defoamer is a silicone defoamer; and the antifreeze can be selected from ethylene glycol, propylene glycol, glycerol, urea and inorganic salts such as sodium chloride.

For adjuvants that can be used for the seed treatment suspension, the film-forming agent may be polyethylene glycol, polyvinyl alcohol resin, polyvinyl pyrrolidone, hydroxyethyl cellulose, poly(vinyl acetate), sodium carboxymethyl cellulose, gum arabic, gelatin, polyvinyl alcohol, polyacrylamide, or mixtures thereof. The skilled person can adjust the proportion of poly(vinyl acetate) according to the desired viscosity of the product.

Compared with the prior art, the present invention has the beneficial effects as follows:

(1) The fungicidal compositions provided by the present invention have an excellent efficacy on crop diseases caused by *Fusarium spp.* The compounding of the compound ZJS178 and the triazole fungicide has a synergistic effect, which can significantly improve the fungicidal activity and efficacy. The compounding of the compound ZJS178 and the succinate dehydrogenase inhibitor fungicide has a synergistic effect, significantly enhancing the fungicidal effect, since the two components respectively inhibit the mechanical energy (motor protein) and biological energy (ATP synthesis) of pathogens, and the two mechanisms of action are different but interrelated. The compounding of the compound ZJS178 and the pyrrole fungicide has a synergistic effect, which significantly improve the fungicidal activity against *Fusarium spp.,* with significant efficacy on seed-borne and soil-borne crop diseases caused by *Fusarium spp..* The compounding of the compound ZJS178 and thiophanate-methyl or prochloraz has a synergistic effect, which could significantly improve the fungicidal activity and efficacy. The compounding of the compound ZJS178 and the strobilurin fungicide has a significant synergistic effect, and could significantly improve the fungicidal activity and efficacy.

(2) The compositions provided by the present invention are composed of active ingredients with different mechanisms of action, have no cross-resistance, are beneficial for overcoming and delaying the resistance of pathogens, have good crop safety, and meet the requirements of pesticide ingredients reduction and efficacy increase.

**Detailed Description of the Invention**

The present invention will be further described in conjunction with specific examples. The following examples are only used to illustrate the present invention and are not intended to limit the scope of application of the present invention. Any modifications or substitutions made to the methods, steps, or conditions of the present invention without departing from the spirit and essence of the present invention fall within the scope of the present invention.

The experimental methods used in the following examples are conventional methods unless otherwise specified. The materials, reagents, etc. used, unless otherwise specified, are commercially available.

Example 1: Synthesis of compound ZJS178

Step 1: Synthesis of intermediate b

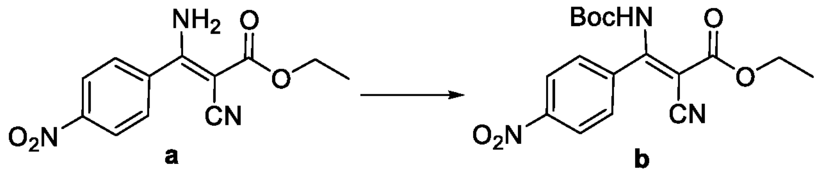

a b

To a reaction flask were added 7.0 g of raw material a (CAS No. 67710-36-5) and 150 mL of dichloromethane. 11.7 g of Boc anhydride was added under an ice bath, then 6.0 g of triethylamine and 3.3 g of DMAP were added slowly. Stirring was continued under an ice bath for 0.5 h and then the reaction mixture was brought to room temperature, followed by another 5 h of stirring. After completion of the reaction, 1 M hydrochloric acid was added to the reaction solution. The organic phase was separated, and the organic phase was washed once with purified water and once with saturated aqueous sodium chloride. The organic phase was dried with anhydrous $Na_2SO_4$ and concentrated to give 9.6 g of an intermediate b. The crude product was used directly in the next step without further purification.

Step 2: Synthesis of intermediate c

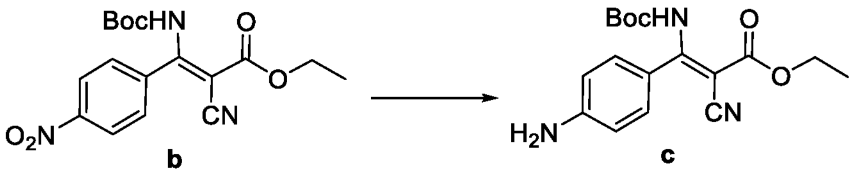

b c

To a reaction flask were added 9.6 g of the intermediate b, 120 mL of ethanol, and 24 mL of water. The temperature was raised to 90 °C. 3.7 g of iron powder and 12 mL of saturated ammonium chloride solution were added, and the reaction was continued for 4 h. After completion of the reaction, the mixture was filtered through diatomite. The filtrate was concentrated, added with water, and extracted three times with ethyl acetate. The organic phases were combined, concentrated and separated by column chromatography (eluent: ethyl acetate: petroleum ether, volume ratio 1: 2) to give 4.5 g of an intermediate c, with a yield of 51.1 %.

Step 3: Synthesis of intermediate d

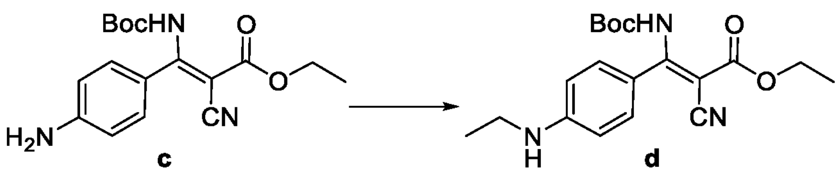

c d

To 20 mL of tetrahydrofuran were added 0.19 g of sodium hydride, and 1.0 g of the intermediate c. After warming to room temperature, the reaction mixture was stirred for 30 minutes. Then, 0.74 g of ethyl iodide was added and the reaction mixture was stirred at room temperature overnight. After completion of the reaction, the reaction was quenched by adding water and extracted with ethyl acetate three times. The organic phases were combined, concentrated and separated by column chromatography (eluent: ethyl acetate: petroleum ether, volume ratio 1:5) to give 0.52 g of an intermediate d, with a yield of 48.0 %.

Step 4: Synthesis of intermediate e

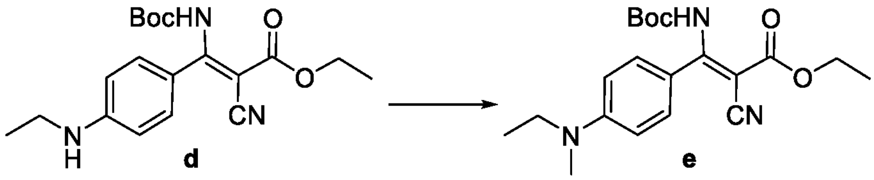

To 10 mL of tetrahydrofuran were added 0.11 g of sodium hydride, and 0.5 g of the intermediate d. After warming to room temperature, the reaction mixture was stirred for 30 minutes. Then, 0.40 g of methyl iodide was added and the reaction mixture was stirred at room temperature overnight. After completion of the reaction, the reaction was quenched by adding water and extracted with ethyl acetate three times. The organic phases were combined, concentrated and separated by column chromatography (eluent: ethyl acetate: petroleum ether, volume ratio 1: 5) to give 0.34 g of an intermediate e, with a yield of 65.5 %.

Step 5: Synthesis of compound ZJS178

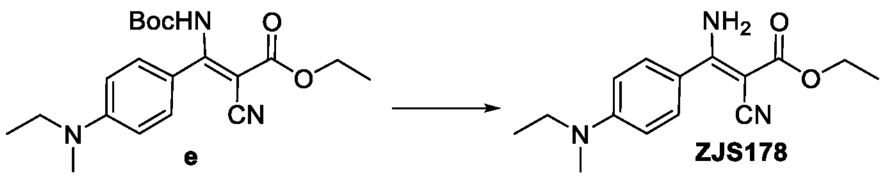

To a reaction flask were added 0.34 g of the intermediate e and 10 mL of tetrahydrofuran. Hydrogen chloride gas was prepared by dropwise adding concentrated sulfuric acid to sodium chloride. The reaction solution was slowly bubbled, after 1 h, the aeration was stopped. The mixture was stirred at room temperature overnight. After completion of the reaction, the reactant was added with a saturated aqueous solution of sodium bicarbonate and extracted with ethyl acetate twice. The organic phases were combined, concentrated and separated by column chromatography (eluent: ethyl acetate: petroleum ether, volume ratio 1:2) to give 0.22 g of a compound ZJS178, with a yield of 93.2 %.

**Example 2:** Laboratory toxicity test of compound ZJS178 compounded with tebuconazole against *Fusarium graminearum*

Test object: tebuconazole-sensitive (TS) and tebuconazole-resistant (TR) *Fusarium graminearum* strains were isolated from the field, and the tested strains were identified by morphology, pathogenicity and resistance, and then preserved by the laboratory for future use.

Test reagents: compound ZJS178 synthesized by Example 1; tebuconazole provided by Zhejiang Research Institute of Chemical Industry.

Test method: refer to "Agricultural Industry Standard of the People's Republic of China NY/T 1156.2-2006" mycelial growth rate method. Five dosages of each reagent were set according to the active ingredient content, and the growth inhibition rate of the pathogens was between 10 % and 90 %. The above-mentioned pathogens of wheat head blight were inoculated on a PDA medium. When the colony grew to 2/3 of the culture dish, a fungicidal block at the edge of the colony was made by a punch with a diameter of 5 mm. The fungicidal block was transferred to the center of the pre-prepared drug-containing medium plate using an inoculating needle, and then placed in a 25 °C incubator for 3 days. The diameter of each treated colony was measured with a caliper using a cross method, and the corrected inhibition percentage was calculated. $EC_{50}$ values for each reagent were then calculated using linear regression analysis between the probability of inhibition values and the log of the series of concentrations, repeated 4 times per treatment. The compound ZJS178 was set as the standard reagent, and the co-toxicity coefficient (CTC) was calculated according to the following formulas.

$$\text{Actual Toxicity Index (ATI)} = (EC_{50} \text{ of standard reagent} / EC_{50} \text{ of test reagent}) \times 100;$$

Theoretical Toxicity Index (TTI) = Standard reagent toxicity index x Percentage of the standard reagent in the mixed combination + Test reagent toxicity index x Percentage of the test reagent in the mixed combination;

$$\text{Co-Toxicity Coefficient (CTC)} = (\text{ATI}/\text{TTI}) \times 100\%;$$

A CTC value of less than 80 indicates an antagonistic effect; A CTC value of 80-120 indicates an additive effect; A CTC value of greater than 120 indicates a synergistic effect.

The test results are shown in Tables 1 and 2.

Table 1: Laboratory toxicity test results of compound ZJS178 compounded with tebuconazole against tebuconazole-sensitive *Fusarium graminearum* (TS)

| Reagent | $EC_{50}$ (μg/ mL) | Actual Toxicity Index (ATI) | Theoretical Toxicity Index (TTI) | Co-toxicity coefficient (CTC) |
|---|---|---|---|---|
| ZJS178 (A) | 0.0385 | 100.00 | / | / |
| Tebuconazole (B) | 0.1746 | 22.05 | / | / |
| A+B (10: 1) | 0.0365 | 105.48 | 92.91 | 113.52 |
| A+B (8: 1) | 0.0378 | 101.85 | 91.34 | 111.51 |
| A+B (5: 1) | 0.0402 | 95.77 | 87.01 | 110.07 |
| A+B (4: 1) | 0.0412 | 93.45 | 84.41 | 110.71 |
| A+B (3: 1) | 0.0391 | 98.47 | 80.51 | 122.30 |
| A+B (2: 1) | 0.0381 | 101.05 | 74.02 | 136.52 |
| A+B (1: 1) | 0.0438 | 87.90 | 61.03 | 144.04 |
| A+B (1: 2) | 0.0617 | 62.40 | 48.03 | 129.91 |
| A+B (1: 3) | 0.0751 | 51.26 | 41.54 | 123.42 |
| A+B (1: 4) | 0.0868 | 44.35 | 37.64 | 117.84 |
| A+B (1: 5) | 0.09062 | 42.49 | 35.04 | 121.24 |
| A+B (1: 8) | 0.1082 | 35.58 | 30.71 | 115.86 |
| A+B (1: 10) | 0.1103 | 34.90 | 29.14 | 119.80 |

Table 2: Laboratory toxicity test results of compound ZJS178 compounded with tebuconazole against tebuconazole-resistant *Fusarium graminearum* (TR)

| Reagent | $EC_{50}$ (μg/ mL) | ATI | TTI | CTC |
|---|---|---|---|---|
| ZJS178 (A) | 0.0356 | 100.00 | / | / |
| Tebuconazole (B) | 1.5236 | 2.34 | / | / |
| A+B (10: 1) | 0.0378 | 94.18 | 91.12 | 103.36 |
| A+B (8: 1) | 0.0381 | 93.44 | 89.15 | 104.81 |
| A+B (5: 1) | 0.0393 | 90.59 | 83.72 | 108.20 |
| A+B (4: 1) | 0.0401 | 88.78 | 80.47 | 110.33 |
| A+B (3: 1) | 0.0412 | 86.41 | 75.58 | 114.32 |
| A+B (2: 1) | 0.0421 | 84.56 | 67.45 | 125.38 |
| A+B (1: 1) | 0.0576 | 61.81 | 51.17 | 120.79 |
| A+B (1:2) | 0.0817 | 43.57 | 34.89 | 124.89 |
| A+B (1: 3) | 0.1051 | 33.87 | 26.75 | 126.61 |

(continued)

| Reagent | $EC_{50}$ (µg/ mL) | ATI | TTI | CTC |
|---|---|---|---|---|
| A+B (1:4) | 0.1482 | 24.02 | 21.87 | 109.84 |
| A+B (1: 5) | 0.1702 | 20.92 | 18.61 | 112.37 |
| A+B (1: 8) | 0.2602 | 13.68 | 13.19 | 103.74 |
| A+B (1: 10) | 0.3106 | 11.46 | 11.22 | 102.20 |

It can be seen from Tables 1 and 2 that the compound ZJS178 has a strong inhibition effect against tebuconazole-resistant (TR) and tebuconazole-sensitive (TS) *Fusarium graminearum.* The compounding of the compound ZJS178 and tebuconazole in a ratio of 2: 1, 1: 1 and 1: 2 shows a synergistic effect on both resistant and sensitive strains.

**Example 3:** Laboratory toxicity test of compound ZJS178 compounded with metconazole against *Fusarium fujikuroi*

Test object: the metconazole-sensitive (MS) and metconazole-resistant (MR) strains of *Fusarium fujikuroi* were isolated from the field, and the tested strains were identified by morphology, pathogenicity and resistance, and then preserved by the laboratory.

Test reagents: compound ZJS178 synthesized by Example 1; metconazole (provided by Zhejiang Research Institute of Chemical Industry).

The bioassay method was referred to the description in Example 2.

The test results are shown in Tables 3 and 4.

Table 3: Laboratory toxicity test results of compound ZJS178 compounded with metconazole against metconazole-sensitive *Fusarium fujikuroi*(MS)

| Reagent | $EC_{50}$ (µg/ mL) | ATI | TTI | CTC |
|---|---|---|---|---|
| ZJS178 (A) | 0.0690 | 100.00 | / | / |
| Metconazole (B) | 0.2274 | 30.34 | / | / |
| A+B (15: 1) | 0.0658 | 104.86 | 95.65 | 109.64 |
| A+B (10: 1) | 0.0637 | 108.32 | 93.67 | 115.64 |
| A+B (5: 1) | 0.0656 | 105.18 | 88.39 | 119.00 |
| A+B (4: 1) | 0.0668 | 103.29 | 86.07 | 120.01 |
| A+B (3: 1) | 0.0611 | 112.93 | 82.59 | 136.74 |
| A+B (2: 1) | 0.0701 | 98.43 | 76.78 | 128.20 |
| A+B (1: 1) | 0.0838 | 82.34 | 65.17 | 126.34 |
| A+B (1: 2) | 0.0961 | 71.80 | 53.56 | 134.05 |
| A+B (1: 3) | 0.1102 | 62.61 | 47.76 | 131.11 |
| A+B (1: 4) | 0.1214 | 56.84 | 44.27 | 128.37 |
| A+B (1: 5) | 0.1306 | 52.83 | 41.95 | 125.94 |
| A+B (1: 10) | 0.1782 | 38.72 | 36.68 | 105.58 |
| A+B (1: 15) | 0.1933 | 35.70 | 34.70 | 102.88 |

Table 4: Laboratory toxicity test results of compound ZJS178 compounded with metconazole against metconazole-resistance *Fusarium fujikuroi*(MR)

| Reagent | $EC_{50}$ (µg/ mL) | ATI | TTI | CTC |
|---|---|---|---|---|
| ZJS178 (A) | 0.0621 | 100.00 | / | / |
| Metconazole (B) | 1.8731 | 3.32 | / | / |
| A+B (15: 1) | 0.0628 | 98.89 | 93.96 | 105.25 |

(continued)

| Reagent | $EC_{50}$ (μg/ mL) | ATI | TTI | CTC |
|---|---|---|---|---|
| A+B (10: 1) | 0.0617 | 100.65 | 91.21 | 110.35 |
| A+B (5: 1) | 0.0606 | 102.48 | 83.89 | 122.16 |
| A+B (4: 1) | 0.0618 | 100.49 | 80.66 | 124.57 |
| A+B (3: 1) | 0.0611 | 101.64 | 75.83 | 134.03 |
| A+B (2: 1) | 0.0711 | 87.34 | 67.77 | 128.88 |
| A+B (1: 1) | 0.0863 | 71.96 | 51.66 | 139.30 |
| A+B (1: 2) | 0.1326 | 46.83 | 35.54 | 131.76 |
| A+B (1: 3) | 0.1702 | 36.49 | 27.49 | 132.74 |
| A+B (1: 4) | 0.2616 | 23.74 | 22.65 | 104.80 |
| A+B (1: 5) | 0.3101 | 20.03 | 19.43 | 103.07 |
| A+B (1: 10) | 0.4752 | 13.07 | 12.10 | 107.96 |
| A+B (1: 15) | 0.6233 | 9.96 | 9.36 | 106.46 |

It can be seen from Tables 3 and 4 that the compound ZJS178 has a strong inhibition effect on the mycelial growth of both metconazole-sensitive and metconazole-resistance *Fusarium fujikuroi.* The compounding of the compound ZJS178 and metconazole in a ratio of 3: 1, 2: 1, 1: 1, 1: 2 and 1: 3 shows a synergistic effect on both resistant and sensitive strains.

**Example 4: Laboratory toxicity test of compound ZJS178 compounded with tebuconazole against *Fusarium oxysporum***

Test object: *Fusarium oxysporum* were isolated from diseased strawberries in the field. The tested strains were identified by morphology and pathogenicity, and preserved by the laboratory.

Test reagents: compound ZJS178 synthesized by Example 1; tebuconazole (provided by Zhejiang Research Institute of Chemical Industry).

The bioassay method was referred to the description in Example 2.

The test results are shown in Table 5.

Table 5: Laboratory toxicity test results of compound ZJS178 compounded with tebuconazole against *Fusarium oxysporum*

| Reagent | $EC_{50}$ (μg/ mL) | ATI | TTI | CTC |
|---|---|---|---|---|
| ZJS178 (A) | 0.03987 | 100.00 | / | / |
| Tebuconazole (B) | 0.2758 | 14.46 | / | / |
| A+B (1: 8) | 0.1334 | 29.89 | 23.96 | 124.72 |
| A+B (1: 6) | 0.1135 | 35.13 | 26.68 | 131.66 |
| A+B (1: 4) | 0.0856 | 46.58 | 31.57 | 147.55 |
| A+B (1: 3) | 0.0721 | 55.30 | 35.85 | 154.27 |
| A+B (1: 2) | 0.0538 | 74.11 | 42.97 | 172.45 |
| A+B (1: 1) | 0.0411 | 97.01 | 57.23 | 169.50 |
| A+B (2: 1) | 0.0322 | 123.82 | 71.49 | 173.21 |
| A+B (3: 1) | 0.0303 | 131.58 | 78.62 | 167.38 |
| A+B (4: 1) | 0.0311 | 128.20 | 82.89 | 154.66 |
| A+B (6: 1) | 0.0319 | 124.98 | 87.78 | 142.38 |
| A+B (8: 1) | 0.0321 | 124.21 | 90.50 | 137.25 |

It can be seen from the results in Table 5 that the compounding of the compound ZJS178 and tebuconazole has a synergistic effect and can significantly improve the inhibition effect of the reagent against *Fusarium oxysporum.*

**Example 5. Field efficacy test**

I. Formulation preparation

The percentage contents in all formulation ratios were expressed as a mass percentage.

(1) A water dispersible granule comprising 40 % ZJS178 • tebuconazole
10 % of ZJS178, 30 % of tebuconazole, 3 % of TERSPERSE 2700, 2% of a dispersant NNO (alkyl naphthalene sulfonate formaldehyde condensate), 3 % of Nekal powder BX (sodium dibutyl naphthalene sulfonate), 4 % of K-12 (sodium dodecyl sulfate), 3 % of diatomite, 5 % of glucose and a balance of kaolin to 100% were weighed.
According to the formulation ratio, granulation was performed by a conventional method for preparing a water dispersible granule, i.e. mixing the active ingredients and the dispersant, the moisturizer, the binder, etc., and then pulverizing by an ultramicro airflow, and adding into a granulator equipped with a sieve of certain specification. A granule product was obtained by drying and sieving.
(2) A suspension comprising 30 % ZJS178 • tebuconazole
15 % of ZJS178, 15 % of tebuconazole, 2 % of TERSPERSE 2500, 3 % of TERSPERSE 2425, 0.2 % of xanthan gum, 3 % of white carbon black, 5 % of ethylene glycol, 0.3 % of benzoic acid, 0.5 % of a silicone defoamer and a balance of deionized water to 100 % were weighed.
According to the formulation ratio, with water as the medium, the active ingredients, dispersant, suspending agent and antifreeze were added to a batching kettle to be mixed well. The mixture was dispersed by ball mill or high-speed shear for 30 min, and then sanded with a sand mill to prepare a suspension.
(3) A suspension comprising 25 % ZJS178 • metconazole
15 % of ZJS178, 10 % of metconazole, 2 % of NNO, 2 % of TERSPERSE 2500, 1 % of an emulsifier T-60, 3 % of an agricultural emulsifier 700#, 0.1 % of xanthan gum, 3 % of white carbon black, 5 % of propylene glycol, 0.5 % of formaldehyde, 0.5 % of a silicone defoamer, and a balance of deionized water to 100 % were weighed.
According to the formulation ratio, with water as the medium, the active ingredients, dispersant, suspending agent and antifreeze were added to a batching kettle to be mixed well. The mixture was dispersed by ball mill or high-speed shear for 30 min, and then sanded with a sand mill to prepare a suspension.
(4) A microemulsion comprising 40 % ZJS178 • tebuconazole
25 % of ZJS178, 15 % of tebuconazole, 4 % of TX-10, 6 % of an agricultural emulsifier 500#, 4 % of an agricultural emulsifier 1601#, 15 % of cyclohexanone, 5 % of N-methylpyrrolidone, 5 % of n-butanol, and 1 % of epichlorohydrin were weighed, dissolved completely and mixed well. A balance of deionized water was added to 100 % and stirred to prepare a microemulsion.
The active ingredient, solvent and emulsifier were added together to dissolve into a homogeneous oil phase. A water-soluble component was mixed with water to obtain an aqueous phase. The oil phase was mixed with the aqueous phase under high agitation to produce a microemulsion.
(5) An emulsion in water comprising 15 % ZJS178 • tebuconazole
10 % of ZJS178, 5 % of tebuconazole, 1.5 % of nonylphenol polyoxyethylene (EO=10) ether phosphate, 2.5 % of triphenylethylphenol polyoxyethylene ether phosphate (agricultural emulsifier 600# phosphate), 1 % of epichlorohydrin, 5 % of ethylene glycol, 20 % of xylene, 10 % of cyclohexanone, 0.3 % of xanthan gum, 0.5 % of benzoic acid and a balance of deionized water to 100 % were weighed.

The above-mentioned raw materials were mixed and subjected to high-speed shearing and emulsifying.

II. Field efficacy test against wheat head blight

The prevention and treatment of wheat head blight was carried out according to NY/T1464.15-2007 Guidelines on efficacy evaluation of pesticides Part 15: Fungicides against fusarium head blight of wheat. The reagent was applied once at the initial stage of heading and flowering of wheat, and once again at 6-day intervals. The survey was performed at the milky stage. Each experimental plot was sampled at 5 points along the diagonal line, 100-200 ears were investigated at each point, and the number of diseased ears at each level and the total number of ears were recorded according to the percentage of dry ear area in the whole ear area. The disease rating scale is as follows:

Scale 0: no disease on all wheat ears;
Scale 1: no more than 1/4 by area of the wheat ears are blight;

Scale 2: from 1/4 to 1/2 by area of the wheat ears are blight;
Scale 3: from 1/2 to 3/4 by area of the wheat ears are blight; and
Scale 5: greater than 3/4 by area of the wheat ears are blight.

Calculation method of efficacy: according to the investigation results, the disease index and the efficacy are calculated according to the following formulas.

Disease index = ∑ (number of diseased ears at each scale x relative disease scale number)/(total number of investigated ears x 5)

Reagent Efficacy (%) = (Disease index after treatment in blank control area - Disease index after treatment in reagent treatment area) / Disease index after treatment in blank control area x100 %

The test results are shown in Table 6.

Table 6: Field efficacy test results of compound ZJS178 compounded with triazole against wheat head blight

| Reagent treatment | Active ingredient content (grams / Chinese acre) | Efficacy % (after 2 doses) * |
|---|---|---|
| Water dispersible granule comprising 40 % ZJS178 • tebuconazole | 10 | 89.92[a] |
| Suspension comprising 30 % ZJS178 • tebuconazole | 10 | 92.37[a] |
| Suspension comprising 25 % ZJS178 • Metconazole | 10 | 96.58[a] |
| Microemulsion comprising 40 % ZJS178 • tebuconazole | 10 | 92.97[a] |
| Emulsion in water comprising 15 % ZJS178 • tebuconazole | 10 | 88.99[a] |
| Suspension comprising 25 % ZJS178 | 10 | 85.54[b] |
| 430 g/L tebuconazole suspension (commercially available) | 10 | 76.12[c] |
| * Different lowercase letters after the same column of data indicate significant differences at the P<0.05 level. | | |

It can be seen from the results of the above field efficacy test (Table 6) that the compouding of ZJS178 • triazole fungicide can effectively prevent and treat wheat head blight, and the combination is significantly better than a single control at the same dosage. The reagent is safe for the experimental crops within the scope of experimental use.

The results of laboratory bioassay and field efficacy test show that: the composition of the present invention has a synergistic effect and has excellent inhibition and efficacy against *Fusarium* diseases in a variety of crops. The composition consists of active ingredients with different mechanisms of action, which is beneficial to overcome and delay the emergence of pathogen resistance and is safe for experimental crops.

**Example 6:** Laboratory toxicity test of compound ZJS178 compounded with pydiflumetofen against *Fusarium graminearum*

Test object: *Fusarium graminearum,* isolated from the field, identified as *Fusarium graminearum* by morphological, pathogenic and other biological methods, was preserved by the laboratory for future use.

Test reagents: compound ZJS178 synthesized by Example 1, pydiflumetofen (Syngenta Nantong Crop Protection Co. Ltd., commercially available).

Test method: refer to "Agricultural Industry Standard of the People's Republic of China NY/T 1156.2-2006" mycelial growth rate method. Five dosages of each reagent were set according to the active ingredient content, and the growth inhibition rate of the pathogen was between 10 % and 90 %. The above-mentioned pathogens of wheat head blight were inoculated on a PDA medium. When the colony grew to 2/3 of the culture dish, a fungicidal block at the edge of the colony was made by a punch with a diameter of 5 mm. The fungicidal block was transferred to the center of the pre-prepared drug-containing medium using an inoculating needle, and then placed in a 25 °C incubator for 3 days. The diameter in cm of each treated colony was measured with a caliper using a cross method, and the corrected inhibition percentage was calculated. $EC_{50}$ values for each reagent were then calculated using linear regression analysis between the probability of inhibition values and the log of the series of concentrations, repeated 4 times per treatment. The

compound ZJS178 was set as the standard reagent, and the co-toxicity coefficient (CTC) was calculated according to the following formulas.

$$\text{Actual Toxicity Index (ATI)} = (\text{EC}_{50} \text{ of standard reagent}/\text{EC}_{50} \text{ of test reagent}) \times 100;$$

Theoretical Toxicity Index (TTI) = Standard reagent toxicity index x Percentage of the standard reagent in the mixed combination + Test reagent toxicity index x Percentage of the test reagent in the mixed combination;

$$\text{Co-Toxicity Coefficient (CTC)} = (\text{ATI}/\text{TTI}) \times 100\%;$$

A CTC value of less than 80 indicates an antagonistic effect; A CTC value of 80-120 indicates an additive effect; A CTC value of greater than 120 indicates a synergistic effect.

The test results are shown in Table 7.

Table 7: Laboratory toxicity test results of compound ZJS178 compounded with pydiflumetofen against *Fusarium graminearum*

| Reagent | $EC_{50}$ (μg/ mL) | ATI | TTI | CTC |
|---|---|---|---|---|
| ZJS178 (A) | 0.0379 | 100.00 | / | / |
| Pydiflumetofen | 0.3191 | 11.88 | / | / |
| A+B (9: 1) | 0.0357 | 106.16 | 91.19 | 116.42 |
| A+B (7: 1) | 0.0322 | 117.70 | 88.98 | 132.27 |
| A+B (5: 1) | 0.0306 | 123.86 | 85.31 | 145.18 |
| A+B (4: 1) | 0.0315 | 120.32 | 82.38 | 146.06 |
| A+B (3: 1) | 0.0314 | 120.70 | 77.97 | 154.81 |
| A+B (2: 1) | 0.0332 | 114.16 | 70.63 | 161.64 |
| A+B (1: 1) | 0.0429 | 88.34 | 55.94 | 157.93 |
| A+B (1: 2) | 0.0596 | 63.59 | 41.25 | 154.15 |
| A+B (1: 3) | 0.0702 | 53.99 | 33.91 | 159.22 |
| A+B (1: 4) | 0.0916 | 41.38 | 29.50 | 140.25 |
| A+B (1: 5) | 0.1181 | 32.09 | 26.56 | 120.81 |
| A+B (1: 7) | 0.1532 | 24.74 | 22.89 | 108.07 |
| A+B (1: 9) | 0.1583 | 23.94 | 20.69 | 115.72 |

As can be seen from the results in Table 7, the compound ZJS178 and pydiflumetofen both have excellent inhibition effect against *Fusarium graminearum,* and the compounding of the two in a range of 5: 1 to 1: 5 has a significant synergistic effect.

**Example 7:** Laboratory toxicity test of compound ZJS178 compounded with penflufen against *Fusarium fujikuroi*

Test object: *Fusarium fujikuroi,* isolated from the field, identified as *Fusarium fujikuroi* by morphological, pathogenic and other biological methods, was preserved by the laboratory.

Test reagents: compound ZJS178 synthesized by Example 1, penflufen (Bayer AG, commercially available).

The bioassay method was referred to the description in Example 6.

The test results are shown in Table 8.

Table 8: Laboratory toxicity test results of compound ZJS178 compounded with penflufen against *Fusarium fujikuroi*

| Reagent | $EC_{50}$ (μg/ mL) | ATI | TTI | CTC |
|---|---|---|---|---|
| ZJS178 (A) | 0.0671 | 100.00 | / | / |

(continued)

| Reagent | $EC_{50}$ (μg/ mL) | ATI | TTI | CTC |
|---|---|---|---|---|
| Penflufen (B) | 0.2937 | 22.85 | / | / |
| A+B (9: 1) | 0.0639 | 105.01 | 92.28 | 113.79 |
| A+B (7: 1) | 0.0582 | 115.29 | 90.36 | 127.60 |
| A+B (5: 1) | 0.0516 | 130.04 | 87.14 | 149.23 |
| A+B (4: 1) | 0.0589 | 113.92 | 84.57 | 134.71 |
| A+B (3:1) | 0.0575 | 116.70 | 80.71 | 144.58 |
| A+B (2:1) | 0.0557 | 120.47 | 74.28 | 162.17 |
| A+B (1: 1) | 0.0669 | 100.30 | 61.42 | 163.29 |
| A+B (1: 2) | 0.0836 | 80.26 | 48.56 | 165.27 |
| A+B (1: 3) | 0.1072 | 62.59 | 42.13 | 148.55 |
| A+B (1: 4) | 0.1086 | 61.79 | 38.28 | 161.42 |
| A+B (1: 5) | 0.1181 | 56.82 | 35.71 | 159.13 |
| A+B (1: 7) | 0.1772 | 37.87 | 32.49 | 116.55 |
| A+B (1: 9) | 0.1993 | 33.67 | 30.56 | 110.16 |

It can be seen from the results in Table 8 that the compound ZJS178 and penflufen both have a very good inhibition effect against *Fusarium fujikuroi,* and the compounding of the compound ZJS178 and penflufen in a range of 5: 1 to 1: 5 has a significant synergistic effect.

**Example 8:** Field efficacy test

I. Formulation preparation

The percentage contents in all formulation ratios were expressed as a mass percentage.

(1) a water dispersible granule comprising 40 % ZJS178 • pydiflumetofen 20 % of ZJS178, 20 % of pydiflumetofen, 3 % of TERSPERSE 2700, 2 % of a dispersant NNO (alkyl naphthalene sulfonate formaldehyde condensate), 3 % of Nekal powder BX (sodium dibutyl naphthalene sulfonate), 4 % of K-12 (sodium dodecyl sulfate), 3 % of diatomite, 5 % of glucose and a balance of kaolin to 100 % were weighed.
According to the formulation ratio, granulation was performed by a conventional method for preparing a water dispersible granule, i.e. mixing the active ingredients and the dispersant, the moisturizer, the binder, etc., and then pulverizing by an ultramicro airflow, and adding into a granulator equipped with a sieve of certain specification. A granule product was obtained by drying and sieving.
(2) A suspension comprising 10 % ZJS178 • penflufen
5 % of ZJS178, 5 % of penflufen, 2 % of TERSPERSE 2500, 3 % of TERSPERSE 2425, 0.2 % of xanthan gum, 3 % of white carbon black, 5 % of ethylene glycol, 0.5 % of formaldehyde, 0.3 % of benzoic acid, and 0.5 % a silicon defoamer (product name: s-29 Nanjing Sixin Scientific-Technological Application Research Institute Co., Ltd.), and a balance of deionized water to 100 % were weighed.

According to the formulation ratio, with water as the medium, the active ingredients, dispersant, suspending agent and antifreeze were added to a batching kettle to be mixed well. The mixture was dispersed by ball mill or high-speed shear for 30 min, and then sanded with a sand mill to prepare a suspension.

II. Field test

2.1 Field efficacy test against wheat head blight

The prevention and treatment of wheat head blight was carried out according to NY/T1464.15-2007 Guidelines on efficacy evaluation of pesticides Part 15: Fungicides against fusarium head blight of wheat. The reagent was applied

once at the initial stage of heading and flowering of wheat, and once again at 6-day intervals. The survey was performed at two weeks after the application. Each experimental plot was sampled at 5 points along the diagonal line, 100-200 ears were investigated at each point, and the number of diseased ears at each level and the total number of ears were recorded according to the percentage of dry ear area in the whole ear area. The disease rating scale is as follows:

Scale 0: no disease on all wheat ears;
Scale 1: no more than 1/4 by area of the wheat ears are blight;
Scale 2: from 1/4 to 1/2 by area of the wheat ears are blight;
Scale 3: from 1/2 to 3/4 by area of the wheat ears are blight; and
Scale 4: greater than 3/4 by area of the wheat ears are blight.

Disease index = ∑ (number of diseased ears at each scale x relative disease scale number) / (total number of investigated ears x 5)

Reagent Efficacy (%) = (Disease index after treatment in blank control area - Disease index after treatment in reagent treatment area) / Disease index after treatment in blank control area x100 %

The test results are shown in Table 9.

Table 9. Field efficacy test results of compound ZJS178 •compounded with pydiflumetofen against wheat head blight

| Reagent treatment | Active ingredient content (grams / Chinese acre) | Efficacy % (after 2 doses) |
|---|---|---|
| Water dispersible granule comprising 40 % ZJS178 | 5 | 91.31[ab] |
| • pydiflumetofen | 10 | 94.53[a] |
| | 15 | 97.88[a] |
| Suspension comprising 25 % ZJS178 | 5 | 78.41[c] |
| Suspension comprising 200 g/L pydiflumetofen | 10 | 86.22[b] |
| * Different lowercase letters after the same column of data indicate significant differences at the P<0.05 level. | | |

The results in Table 9 show that ZJS178 • pydiflumetofen fungicidal composition has excellent efficacy against wheat head blight; compared with single reagents, the compounding of the two has a significant synergistic effect at the same dosage.

2.2 Field efficacy test against bakanal disease of rice

The prevention and treatment of bakanal disease of rice was carried out according to the provisions of "GB-T 17980.104-2004 Pesticide -- Guidelines for the field efficacy trials (II) -- Part 104: Fungicides against bakanal disease of rice". The test site was in Dongpu Town, Shaoxing City, and the rice variety was Zhongzao 39 (susceptible variety). The seeds were soaked in a solution diluted to a certain ratio for 72 h, and then germinated, and planted. Nutritive soil was used for seedling raising. The seedling raising process was carried out in strict accordance with the seedling raising process of mechanical transplanting. The seed quantity and soil fertility of all treatments were consistent. Each treatment used 20 trays, and the seed amount per tray was 150 g. One day before transplanting and before heading, the incidence of rice seedling disease was investigated. The rate of diseased plants and efficacy were calculated according to the following formulas.

Rate of diseased plants (%) = Diseased plants / Investigated plants x 100

Reagent efficacy (%) = (Rate of diseased plants in a blank control area - Rate of diseased plants in a reagent treatment area) / Rate of diseased plants in a blank control area x 100

The test results were shown in Table 10.

Table 10: Field efficacy test results of compound ZJS178 compounded with penflufen against bakanal disease of rice

| Reagent Name | Dosage (dilution factor) | Reagent Efficacy (%) | |
|---|---|---|---|
| | | Before transplanting | Before heading |
| Suspension comprising 10 % ZJS178 • penflufen | 3000 | 96.2[b] | 96.8[b] |
| | 2500 | 100[a] | 100[a] |
| | 2000 | 100[a] | 100[a] |
| Suspension comprising 25 % ZJS178 | 5000 (equivalent to the dosage of the suspension comprising 10 % ZJS178 • penflufen in 2000-fold dilution) | 89.6[c] | 89.1[c] |
| Suspension comprising 22.4 % penflufen | 4480 (equivalent to the dosage of the suspension comprising 10 % ZJS178 • penflufen in 2000-fold dilution) | 89.6[c] | 89.4[c] |
| * Different lowercase letters after the same column of data indicate significant differences at the P<0.05 level. | | | |

The results of field efficacy test of Table 10 show that the compounding of the compound ZJS178 and penflufen has an excellent efficacy on bakanal disease of rice; at the same effective dosage, the efficacy of the composition was significantly better than that of single reagents. The composition is safe for the experimental crops within the scope of experimental use.

The results of laboratory bioassay and field efficacy test show that: the synergistic effect of the fungicide composition of the present invention is significant, and the composition is composed of active ingredients with different mechanisms of action, which can delay the resistance of pathogens to single reagents. There is no obvious adverse effect on the experimental crops, and the leaf color and growth vigor are normal.

**Example 9:** Laboratory toxicity test of compound ZJS178 compounded with fludioxonil against *Fusarium pseudograminearum*

Test object: fludioxonil-resistant (FR) and fludioxonil-sensitive (FS) *Fusarium pseudograminearum*, isolated from the field and identified by the laboratory and preserved.

Test reagents: compound ZJS178 synthesized by Example 1; fludioxonil (provided by Zhejiang Research Institute of Chemical Industry).

Test method: refer to "Agricultural Industry Standard of the People's Republic of China NY/T 1156.2-2006" mycelial growth rate method. Five doses of each reagent were set according to the active ingredient content. The above-mentioned *Fusarium pseudograminearum* was inoculated on a PDA medium. When the colony grew to 2/3 of the culture dish, a fungicidal block at the edge of the colony was made by a punch with a diameter of 5 mm. The fungicidal block was transferred to the center of the pre-prepared drug-containing PDA medium using an inoculating needle, and then placed in a 25 °C incubator for 3 days. The diameter in cm of each treated colony was measured with a caliper using a cross method, and the corrected inhibition percentage was calculated. $EC_{50}$ values for each reagent were then calculated using linear regression analysis between the probability of inhibition values and the log of the series of concentrations, repeated 4 times per treatment. The compound ZJS178 was set as the standard reagent, and the co-toxicity coefficient (CTC) was calculated according to the following formulas.

$$\text{Actual Toxicity Index (ATI)} = (\text{EC}_{50} \text{ of standard reagent} / \text{EC}_{50} \text{ of test reagent}) \times 100;$$

Theoretical Toxicity Index (TTI) = Standard reagent toxicity index x Percentage of the standard reagent in the mixed combination + Test reagent toxicity index x Percentage of the test reagent in the mixed combination;

$$\text{Co-Toxicity Coefficient (CTC)} = (\text{ATI}/\text{TTI}) \times 100\%;$$

A CTC value of less than 80 indicates an antagonistic effect; A CTC value of 80-120 indicates an additive effect; A CTC value of greater than 120 indicates a synergistic effect.

The test results are shown in Tables 11 and 12.

Table 11: Laboratory toxicity test results of compound ZJS178 compounded with fludioxonil against fludioxonil-resistant *Fusarium pseudograminearum* (FR)

| Reagent | $EC_{50}$ (μg/ mL) | ATI | TTI | CTC |
|---|---|---|---|---|
| ZJS178 (A) | 0.0383 | 100.00 | / | / |
| Fludioxonil (B) | 18.049 | 0.21 | / | / |
| A+B (11: 1) | 0.0413 | 92.74 | 91.68 | 101.15 |
| A+B (9: 1) | 0.0422 | 90.76 | 90.02 | 100.82 |
| A+B (7: 1) | 0.0416 | 92.07 | 87.53 | 105.19 |
| A+B (5: 1) | 0.0409 | 93.64 | 83.37 | 112.32 |
| A+B (4: 1) | 0.0411 | 93.19 | 80.04 | 116.42 |
| A+B (3: 1) | 0.0425 | 90.12 | 75.05 | 120.07 |
| A+B (2: 1) | 0.0477 | 80.29 | 66.74 | 120.31 |
| A+B (1: 1) | 0.0617 | 62.07 | 50.11 | 123.89 |
| A+B (1: 2) | 0.0936 | 40.92 | 33.47 | 122.24 |
| A+B (1: 3) | 0.1272 | 30.11 | 25.16 | 119.68 |
| A+B (1: 4) | 0.2056 | 18.63 | 20.17 | 92.36 |
| A+B (1: 5) | 0.2318 | 16.52 | 16.84 | 98.10 |
| A+B (1: 7) | 0.3173 | 12.07 | 12.69 | 95.15 |
| A+B (1: 9) | 0.4123 | 9.29 | 10.19 | 91.15 |
| A+B (1: 11) | 0.4467 | 8.57 | 8.53 | 100.54 |

Table 12: Laboratory toxicity test results of compound ZJS178 compounded with fludioxonil against fludioxonil-sensitive *Fusarium pseudograminearum* (FS)

| Reagent | $EC_{50}$ (μg/ mL) | ATI | TTI | CTC |
|---|---|---|---|---|
| ZJS178 (A) | 0.0323 | 100.00 | / | / |
| Fludioxonil (B) | 0.0426 | 75.82 | / | / |
| A+B (11: 1) | 0.0331 | 97.58 | 97.99 | 99.59 |
| A+B (9: 1) | 0.0309 | 104.53 | 97.58 | 107.12 |
| A+B (7: 1) | 0.0327 | 98.78 | 96.98 | 101.86 |
| A+B (5: 1) | 0.0334 | 96.71 | 95.97 | 100.77 |
| A+B (4: 1) | 0.0325 | 99.38 | 95.16 | 104.43 |
| A+B (3: 1) | 0.0326 | 99.08 | 93.96 | 105.45 |
| A+B (2: 1) | 0.0337 | 95.85 | 91.94 | 104.25 |
| A+B (1: 1) | 0.0357 | 90.48 | 87.91 | 102.92 |
| A+B (1: 2) | 0.0317 | 101.89 | 83.88 | 121.47 |
| A+B (1: 3) | 0.0322 | 100.31 | 81.87 | 122.53 |
| A+B (1: 4) | 0.0356 | 90.73 | 80.66 | 112.49 |
| A+B (1: 5) | 0.0397 | 81.36 | 79.85 | 101.89 |
| A+B (1: 7) | 0.0391 | 82.61 | 78.84 | 104.78 |
| A+B (1: 9) | 0.0411 | 78.59 | 78.24 | 100.45 |
| A+B (1: 11) | 0.0434 | 74.42 | 77.84 | 95.62 |

The results in Tables 11 and 12 show that the compound ZJS178 has a good inhibition effect against fludioxonil-resistant (FR) and fludioxonil-sensitive (FS) *Fusarium pseudograminearum.* The rational compounding of the compound ZJS178 and fludioxonil has an additive or synergistic effect with sensitive strains, but has no antagonistic effect.

**Example 10:** Laboratory toxicity test of compound ZJS178 compounded with fludioxonil against *Fusarium fujikuroi*

Test object: *Fusarium fujikuroi* preserved in a culture room of the laboratory.
Test reagents: compound ZJS178 synthesized by Example 1; fludioxonil (provided by Zhejiang Research Institute of Chemical Industry).
The bioassay method was referred to the description in Example 9.
The test results are shown in Table 13.

Table 13: Laboratory toxicity test results of compound ZJS178 compounded with fludioxonil against *Fusarium fujikuroi*

| Reagent | $EC_{50}$ (μg/ mL) | ATI | TTI | CTC |
|---|---|---|---|---|
| ZJS178 (A) | 0.0481 | 100.00 | / | / |
| Fludioxonil (B) | 0.0529 | 90.93 | / | / |
| A+B (11: 1) | 0.0473 | 101.69 | 99.24 | 102.47 |
| A+B (9: 1) | 0.0481 | 100.00 | 99.09 | 100.92 |
| A+B (7: 1) | 0.0447 | 107.61 | 98.87 | 108.84 |
| A+B (5: 1) | 0.0425 | 113.18 | 98.49 | 114.91 |
| A+B (4: 1) | 0.0423 | 113.71 | 98.19 | 115.81 |
| A+B (3: 1) | 0.0451 | 106.65 | 97.73 | 109.13 |
| A+B (2: 1) | 0.0427 | 112.65 | 96.98 | 116.16 |
| A+B (1: 1) | 0.0408 | 117.89 | 95.46 | 123.49 |
| A+B (1: 2) | 0.0415 | 115.90 | 93.95 | 123.37 |
| A+B (1: 3) | 0.0435 | 110.57 | 93.19 | 118.65 |
| A+B (1: 4) | 0.0462 | 104.11 | 92.74 | 112.26 |
| A+B (1: 5) | 0.0501 | 96.01 | 92.44 | 103.86 |
| A+B (1: 7) | 0.0503 | 95.63 | 92.06 | 103.87 |
| A+B (1: 9) | 0.0515 | 93.40 | 91.83 | 101.70 |
| A+B (1: 11) | 0.0527 | 91.27 | 91.68 | 99.55 |

The results in Table 13 show that both ZJS178 and fludioxonil have excellent inhibition effect against *Fusarium fujikuroi,* and the compounding of the two shows an additive or synergistic effect.

**Example 11:** Laboratory toxicity test of compound ZJS178 compounded with fludioxonil against *Fusarium oxysporum*

Test object: *Fusarium oxysporum* preserved in the laboratory.
Test reagents: compound ZJS178 synthesized by Example 1; fludioxonil (provided by Zhejiang Research Institute of Chemical Industry).
The bioassay method was referred to the description in Example 9.
The test results are shown in Table 14.

Table 14. Laboratory toxicity test results of compound ZJS178 compounded with fludioxonil against *Fusarium oxysporum*

| Reagent | $EC_{50}$ (μg/ mL) | ATI | TTI | CTC |
|---|---|---|---|---|
| ZJS178 (A) | 0.0878 | 100.00 | / | / |
| Fludioxonil (B) | 0.0683 | 128.55 | / | / |

(continued)

| Reagent | $EC_{50}$ (μg/ mL) | ATI | TTI | CTC |
|---|---|---|---|---|
| A+B (11: 1) | 0.0872 | 100.69 | 102.38 | 98.35 |
| A+B (9: 1) | 0.0791 | 111.00 | 102.86 | 107.92 |
| A+B (7: 1) | 0.0743 | 118.17 | 103.57 | 114.10 |
| A+B (5: 1) | 0.074 | 118.65 | 104.76 | 113.26 |
| A+B (4: 1) | 0.0721 | 121.78 | 105.71 | 115.20 |
| A+B (3: 1) | 0.0716 | 122.63 | 107.14 | 114.46 |
| A+B (2: 1) | 0.0707 | 124.19 | 109.52 | 113.40 |
| A+B (1: 1) | 0.0623 | 140.93 | 114.28 | 123.33 |
| A+B (1: 2) | 0.0611 | 143.70 | 119.03 | 120.72 |
| A+B (1: 3) | 0.0601 | 146.09 | 121.41 | 120.32 |
| A+B (1: 4) | 0.0622 | 141.16 | 122.84 | 114.91 |
| A+B (1: 5) | 0.0601 | 146.09 | 123.79 | 118.01 |
| A+B (1: 7) | 0.0625 | 140.48 | 124.98 | 112.40 |
| A+B (1: 9) | 0.061 | 143.93 | 125.70 | 114.51 |
| A+B (1: 11) | 0.0709 | 123.84 | 126.17 | 98.15 |

The results in Table 14 show that both the compound ZJS178 and fludioxonil have a significant inhibition effect against *Fusarium oxysporum,* and a reasonable compounding of the two has an additive or synergistic effect.

**Example 12:** Field efficacy test

I. Preparation of a suspension comprising 25 % ZJS178• fludioxonil

The percentages of the seed treatment suspension are all mass percentages. According to the formulation ratio, with water as the medium, the active ingredients, dispersant, suspending agent and antifreeze were added to a batching kettle to be mixed well. The mixture was dispersed by ball mill or high-speed shear for 30 min, and then sanded with a sand mill.

15 % of ZJS178, 10 % of fludioxonil, 2 % of TERSPERSE 2500, 3 % of TERSPERSE 2425, 0.2 % of xanthan gum, 3 % of white carbon black, 5 % of ethylene glycol, 0.3 % of benzoic acid, 0.5 % of a silicone defoamer (product name: s-29 Nanjing Sixin Scientific-Technological Application Research Institute Co., Ltd.), and a balance of deionized water to 100 % were weighed.

II. Field test

Field Application Example 1: Field efficacy test against bakanal disease of rice

The prevention and treatment of bakanal disease of rice was carried out according to the provisions of "GB-T 17980.104-2004 Pesticide -- Guidelines for the field efficacy trials (II) -- Part 104: Fungicides against bakanal disease of rice". The test site was in Dongpu Town, Shaoxing City, and the rice variety was Zhongzao 39 (susceptible variety). The solution was diluted to a certain ratio and soaked for 72 h, and then the seeds were germinated and planted. Nutritive soil was used for seedling raising. The seedling raising process was carried out in strict accordance with the seedling raising process of mechanical transplanting. The seed quantity and soil fertility of all treatments were consistent. Each treatment used 20 trays, and the seed amount per tray was 150 g. One day before transplanting and before heading, the incidence of rice seedling disease was investigated. The rate of diseased plants and efficacy were calculated according to the following formulas.

$$\text{Rate of diseased plants (\%)} = \text{Diseased plants / Investigated plants} \times 100$$

Reagent efficacy (%) = (Rate of diseased plants in a blank control area - Rate of diseased plants in a reagent treatment area) / Rate of diseased plants in a blank control area x 100

The test results are shown in Table 15.

Table 15: Field efficacy test results of compound ZJS178 compounded with fludioxonil against bakanal disease of rice

| Reagent Name | Dosage (dilution factor) | Reagent Efficacy (%) | |
|---|---|---|---|
| | | Before transplanting | Before heading |
| Suspension comprising 25 % ZJS178 • fludioxonil | 5000 | 98.2[a] | 97.6[a] |
| Suspension comprising 25 % ZJS178 | 5000 | 91.6[b] | 90.1[b] |
| Suspension comprising 25 % fludioxonil | 5000 | 86.4[c] | 85.2[c] |
| * Different lowercase letters after the same column of data indicate significant differences at the P<0.05 level. | | | |

The results in Table 15 show that the efficacy of ZJS178 • fludioxonil fungicidal composition against bakanal disease of rice is significantly better than that of single reagents under the same effective dosage soaking condition.

Field Application Example 2: Field efficacy test against

The test site was in Dongpu town, Shaoxing city; the soil type was loam; the fertility was medium; and the pH value was neutral. The wheat variety was Jimai 22. The seed quantity and soil fertility of all treatments were consistent. The medicinal solution was diluted to a certain ratio to mix the seeds. When mixing, the water usage was 2 % of the seed quantity. After mixing, the seeds were placed in a well-ventilated and dark place to dry. Three plots were set for each treatment. Samples were taken at 5 points in each plot before heading. 100 plants were investigated at each point, and the total number of plants and diseased plants were recorded. According to the investigation results, the rate of diseased plants and efficacy were calculated according to the following formulas. The test data were statistically analyzed using Duncan's new multiple range test (DMRT).

Rate of diseased plants (%) = Diseased plants / Investigated plants x 100

Reagent efficacy (%) = (Rate of diseased plants in a blank control area - Rate of diseased plants in a reagent treatment area) / Rate of diseased plants in a blank control area x 100

The test results are shown in Table 16.

Table 16. Field efficacy test results of compound ZJS178 compounded with fludioxonil against wheat crown rot

| Reagent Name | Dosage (a. i. g/100 kg seeds) | Rate of diseased plants (%) | Efficacy (%) |
|---|---|---|---|
| Suspension comprising 25 % ZJS178 • fludioxonil | 10 | 3.4 | 87.36[a] |
| Suspension comprising 25 % ZJS178 (prepared) | 10 | 9.6 | 64.31[b] |
| Suspension comprising 25 % fludioxonil (prepared) | 10 | 8.3 | 69.14[b] |
| Blank control | | 26.9 | |
| * Different lowercase letters after the same column of data indicate significant differences at the P<0.05 level. | | | |

The results in Table 16 show that the efficacy of ZJS178 • fludioxonil fungicidal composition against wheat crown rot is significantly better than that of single reagents under the same effective dosage mixing condition.

The results of laboratory bioassay and field efficacy test show that: the composition of the present invention has a significant synergistic effect, and the composition consists of active ingredients with different mechanisms of action, is beneficial to overcome and delay the occurrence of drug resistance of pathogens. There is no obvious adverse effect on the test crops, and the leaf color and growth vigor are normal, with good safety.

**Example 13:** Laboratory toxicity test of compound ZJS178 compounded with thiophanate-methyl against *F. oxysporum f.sp. niveum*

Test object: *F. oxysporum f.sp. niveum* isolated from the field. The tested strains were identified by morphology and pathogenicity, and then stored in the laboratory for future use.
Test reagents: compound ZJS178 synthesized by Example 1 and thiophanate-methyl provided by Zhejiang Research Institute of Chemical Industry.
Test method: refer to "Agricultural Industry Standard of the People's Republic of China NY/T 1156.2-2006" mycelial growth rate method. Five doses of each reagent were set according to the active ingredient content, and the growth inhibition rate of the pathogen was between 10 % and 90 %. The above-mentioned *F. oxysporum f.sp. niveum* was inoculated on a PDA medium. When the colony grew to 2/3 of the culture dish, a fungicidal block at the edge of the colony was made by a punch with a diameter of 5 mm. The fungicidal block was transferred to the center of the pre-prepared drug-containing medium plate using an inoculating needle, and then placed in a 25 °C incubator for 3 days. The diameter of each treated colony was measured with a caliper using a cross method, and the corrected inhibition percentage was calculated. $EC_{50}$ values for each reagent were then calculated using linear regression analysis between the probability of inhibition values and the log of the series of concentrations, repeated 4 times per treatment. The compound ZJS178 was set as the standard reagent, and the co-toxicity coefficient (CTC) was calculated according to the following formulas.

$$\text{Actual Toxicity Index (ATI)} = (EC_{50} \text{ of standard reagent} / EC_{50} \text{ of test reagent}) \times 100;$$

Theoretical Toxicity Index (TTI) = Standard reagent toxicity index x Percentage of the standard reagent in the mixed combination + Test reagent toxicity index x Percentage of the test reagent in the mixed combination;

$$\text{Co-Toxicity Coefficient (CTC)} = (\text{ATI/TTI}) \times 100\%;$$

A CTC value of less than 80 indicates an antagonistic effect; A CTC value of 80-120 indicates an additive effect; A CTC value of greater than 120 indicates a synergistic effect.
The test results are shown in Table 17.

Table 17: Laboratory toxicity test results of compound ZJS178 compounded with thiophanate-methyl against *F. oxysporum f.sp. Niveum*

| Reagent | $EC_{50}$ (μg/ mL) | Actual Toxicity Index (ATI) | Theoretical Toxicity Index (TTI) | Co-toxicity coefficient (CTC) |
|---|---|---|---|---|
| ZJS178 (A) | 0.0569 | 100.00 | / | / |
| Thiophanate-methyl | 0.2224 | 25.58 | / | / |
| A+B (12: 1) | 0.0602 | 94.53 | 94.28 | 100.27 |
| A+B (9: 1) | 0.0533 | 106.77 | 92.56 | 115.36 |
| A+B (7: 1) | 0.0541 | 105.19 | 90.70 | 115.98 |
| A+B (6: 1) | 0.0511 | 111.37 | 89.37 | 124.62 |
| A+B (4: 1) | 0.0521 | 109.23 | 85.12 | 128.33 |
| A+B (3: 1) | 0.0539 | 105.58 | 81.40 | 129.71 |
| A+B (2: 1) | 0.0588 | 96.79 | 75.20 | 128.71 |
| A+B (1: 1) | 0.0702 | 81.07 | 62.80 | 129.10 |
| A+B (1: 2) | 0.0822 | 69.23 | 50.39 | 137.39 |
| A+B (1: 3) | 0.0901 | 63.16 | 44.19 | 142.93 |
| A+B (1: 4) | 0.1234 | 46.12 | 40.47 | 113.95 |
| A+B (1: 6) | 0.1406 | 40.48 | 36.22 | 111.75 |
| A+B (1: 7) | 0.1622 | 35.09 | 34.89 | 100.56 |
| A+B (1: 9) | 0.1612 | 35.30 | 33.03 | 106.88 |

(continued)

| Reagent | $EC_{50}$ (μg/ mL) | Actual Toxicity Index (ATI) | Theoretical Toxicity Index (TTI) | Co-toxicity coefficient (CTC) |
|---|---|---|---|---|
| A+B (1: 12) | 0.1703 | 33.42 | 31.31 | 106.72 |

As shown in Table 17, when the mass ratio of the compound ZJS178 and thiophanate-methyl is 6: 1 to 1: 3, the inhibition effect on the growth of *F. oxysporum fsp. Niveum* is significantly synergistic. Other ratios achieve additive effects.

**Example 14:** Laboratory toxicity test of compound ZJS178 compounded with prochloraz against *Fusarium graminearum*

Test object: *Fusarium graminearum* preserved in the laboratory.

Test method: refer to "Agricultural Industry Standard of the People's Republic of China NY/T 1156.2-2006" mycelial growth rate method. Five doses of each reagent were set according to the active ingredient content. The above-mentioned *Fusarium graminearum* was inoculated on a PDA medium. When the colony grew to 2/3 of the culture dish, a fungicidal block at the edge of the colony was made by a punch with a diameter of 5 mm. The fungicidal block was transferred to the center of the pre-prepared toxicity-containing PDA medium using an inoculating needle, and then placed in a 25 °C incubator. Each treatment was performed for 4 times. Dependent on the CK colony growth status, the diameter in cm of each treated colony was taken with a caliper using a cross method, and the corrected inhibition percentage was calculated. $EC_{50}$ values for each reagent were then calculated using linear regression analysis between the probability of inhibition values and the log of the series of concentrations, and the co-toxicity coefficient (CTC) was calculated using Sun Yunpei's method.

Efficacy calculation: each colony was crossed by two diameters and the average represented the colony size. The colony growth inhibition rate was calculated according to the following formula: Inhibition rate of colony growth % = (colony growth diameter of blank control - colony growth diameter of reagent treatment) x 100 / colony growth diameter of blank control.

Table 18: Laboratory toxicity test results of compound ZJS178 compounded with prochloraz against *Fusarium graminearum*

| Reagent | $EC_{50}$ (μg/ mL) | ATI | TTI | CTC |
|---|---|---|---|---|
| ZJS178 (A) | 0.0379 | 100.00 | / | / |
| Prochloraz (B) | 0.3191 | 11.88 | / | / |
| A+B (1: 20) | 0.2214 | 17.12 | 16.08 | 106.48 |
| A+B (1: 15) | 0.1788 | 21.20 | 17.39 | 121.91 |
| A+B (1: 12) | 0.1587 | 23.88 | 18.66 | 127.99 |
| A+B (1: 8) | 0.1224 | 30.96 | 21.67 | 142.88 |
| A+B (1: 6) | 0.1067 | 35.52 | 24.47 | 145.17 |
| A+B (1: 4) | 0.0789 | 48.04 | 29.50 | 162.81 |
| A+B (1: 3) | 0.0725 | 52.28 | 33.91 | 154.16 |
| A+B (1: 2) | 0.0599 | 63.27 | 41.25 | 153.37 |
| A+B (1: 1) | 0.0422 | 89.81 | 55.94 | 160.55 |
| A+B (2: 1) | 0.0322 | 117.70 | 70.63 | 166.65 |
| A+B (3: 1) | 0.0311 | 121.86 | 77.97 | 156.30 |
| A+B (4: 1) | 0.0301 | 125.91 | 82.38 | 152.85 |
| A+B (6: 1) | 0.0293 | 129.35 | 87.41 | 147.98 |
| A+B (8: 1) | 0.0301 | 125.91 | 90.21 | 139.58 |
| A+B (12: 1) | 0.0314 | 120.70 | 93.22 | 129.48 |
| A+B (15: 1) | 0.0342 | 110.82 | 94.49 | 117.28 |

(continued)

| Reagent | $EC_{50}$ (μg/ mL) | ATI | TTI | CTC |
|---|---|---|---|---|
| A+B (20: 1) | 0.0365 | 103.84 | 95.80 | 108.38 |

As shown in Table 18, when the mass ratio of the compound ZJS178 and prochloraz is 1: 15 to 12: 1, the inhibition effect on the growth of *Fusarium graminearum* is significantly synergistic. Other ratios achieve additive effects.

Example 15: Laboratory toxicity test of compound ZS178 compounded with prochloraz-manganese chloride complex against *Fusarium oxysporum* Test object: *Fusarium oxysporum* preserved in the laboratory. The bioassay method was referred to the bioassay Example 14.

Table 19: Laboratory toxicity test results of compound ZJS178 compounded with prochloraz -manganese chloride complex against *Fusarium oxysporum*

| Reagent | $EC_{50}$ (μg/ mL) | ATI | TTI | CTC |
|---|---|---|---|---|
| ZJS178 (A) | 0.03987 | 100.00 | / | / |
| Prochloraz-manganese chloride complex (B) | 0.2758 | 14.46 | / | / |
| A+B (1: 20) | 0.1887 | 21.13 | 18.53 | 114.00 |
| A+B (1: 15) | 0.1701 | 23.44 | 19.81 | 118.34 |
| A+B (1: 12) | 0.1524 | 26.16 | 21.04 | 124.34 |
| A+B (1: 8) | 0.1334 | 29.89 | 23.96 | 124.72 |
| A+B (1: 6) | 0.1135 | 35.13 | 26.68 | 131.66 |
| A+B (1: 4) | 0.0856 | 46.58 | 31.57 | 147.55 |
| A+B (1: 3) | 0.0721 | 55.30 | 35.85 | 154.27 |
| A+B (1: 2) | 0.0538 | 74.11 | 42.97 | 172.45 |
| A+B (1: 1) | 0.0411 | 97.01 | 57.23 | 169.50 |
| A+B (2: 1) | 0.0322 | 123.82 | 71.49 | 173.21 |
| A+B (3: 1) | 0.0303 | 131.58 | 78.62 | 167.38 |
| A+B (4: 1) | 0.0311 | 128.20 | 82.89 | 154.66 |
| A+B (6: 1) | 0.0319 | 124.98 | 87.78 | 142.38 |
| A+B (8: 1) | 0.0321 | 124.21 | 90.50 | 137.25 |
| A+B (12: 1) | 0.0355 | 112.31 | 93.42 | 120.22 |
| A+B (15: 1) | 0.0348 | 114.57 | 94.65 | 121.04 |
| A+B (20: 1) | 0.0351 | 113.59 | 95.93 | 118.41 |

As shown in Table 19, when the mass ratio of ZJS178 and prochloraz-manganese chloride complex is 1: 12 to 15: 1, the inhibition effect on the growth of *Fusarium oxysporum* is significantly synergistic. Other ratios achieve additive effects.

**Example 16:** Filed efficacy test

**I. Formulation preparation**

The percentage contents in all formulation ratios were expressed as a mass percentage.

(1) A suspension comprising 20 % ZJS178• thiophanate-methyl
10 % of ZJS178, 10 % of thiophanate-methyl, 2 % of TERSPERSE 2500, 3 % of TERSPERSE 2425, 0.2 % of xanthan gum, 3 % of white carbon black, 5 % of ethylene glycol, 0.3 % of benzoic acid, 0.5 % of a silicone defoamer and a balance of deionized water to 100 % were weighed. According to the formulation ratio, with water as the medium, the active ingredients, dispersant, suspending agent and antifreeze were added to a batching kettle to be mixed well. The

mixture was dispersed by ball mill or high-speed shear for 30 min, and then sanded with a sand mill to prepare a suspension.

(2) A suspension comprising 46 % ZJS178• prochloraz

23 % of ZJS178, 23 % of prochloraz, 2 % of NNO, 2 % of TERSPERSE 2500, 1 % of an emulsifier T-60, 3 % of an agricultural emulsifier 700#, 0.1 % of xanthan gum, 3 % of white carbon black, 5 % of propylene glycol, 0.5 % of formaldehyde, 0.5 % of a silicone defoamer, and a balance of deionized water to 100 % were weighed.

According to the formulation ratio, with water as the medium, the active ingredients, dispersant, suspending agent and antifreeze were added to a batching kettle to be mixed well. The mixture was dispersed by ball mill or high-speed shear for 30 min, and then sanded with a sand mill to prepare a suspension.

**II. Field test**

**2.1 Field Efficacy test against wheat head blight**

The prevention and treatment of wheat head blight was carried out according to NY/T1464.15-2007 Guidelines on efficacy evaluation of pesticides Part 15: Fungicides against fusarium head blight of wheat. The reagent was applied once at the initial stage of heading and flowering of wheat. The survey was performed at the milky stage. Each experimental plot was sampled at 5 points along the diagonal line, 100-200 ears were investigated at each point, and the number of diseased ears at each level and the total number of ears were recorded according to the percentage of dry ear area in the whole ear area. The disease rating scale is as follows:

Scale 0: no disease on all wheat ears;
Scale 1: no more than 1/4 by area of the wheat ears are blight;
Scale 3: from 1/4 to 1/2 by area of the wheat ears are blight;
Scale 5: from 1/2 to 3/4 by area of the wheat ears are blight; and
Scale 7: greater than 3/4 by area of the wheat ears are blight.

Calculation method of efficacy: according to the investigation results, the disease index and the efficacy were calculated according to the following formulas (1) and (2). The test data were statistically analyzed using Duncan's new multiple range test (DMRT).

Disease index = $\sum$ (number of diseased ears at each scale x relative disease scale number)/(total number of investigated ears x 7) (1) (1)

$$\text{Reagent Efficacy (\%)} = (1 - \frac{PT_1}{CK_1}) \times 100 \quad (2)$$

Wherein: $CK_1$ is the disease index after treatment in a blank control area; and $PT_1$ is the disease index after treatment in a reagent-treated area.

Table 20: Field Efficacy Test against wheat head blight

| Reagent treatment | Active ingredient content (grams / Chinese acre) | Efficiency % (milky stage) |
|---|---|---|
| Suspension comprising 46 % ZJS178 • prochloraz | 5 | 91.31[a] |
| | 10 | 94.53[a] |
| | 15 | 97.88[a] |
| Suspension comprising 25 % ZJS178 | 5 | 82.41[b] |
| suspension comprising 200 g/L prochloraz | 12 | 89.22[b] |
| * Different lowercase letters after the same column of data indicate significant differences at the P<0.05 level. | | |

The results in Table 20 show that: a suspension comprising 46 % ZJS178 • prochloraz has a good efficacy against

wheat head blight, up to 91.31 %-97.88 % at the dosage of 5 g active ingredients / Chinese acre to 15 g active ingredients / Chinese acre, better than that of single reagents. The test reagent is safe for the test crop.

**2.2 Field efficacy test against tomato fusarium wilt**

The test site was in Dongpu town, Shaoxing city; the soil type was loam; the fertility was medium; and the pH value was neutral. The variety was Zhefen 202. After the tomato seedlings were transplanted and fixed, the root was irrigated with liquid reagent. See Table 5 for the types and dosages of chemicals. One week after the first administration, the root was re-perfused. The occurrence of tomato fusarium wilt was investigated 21 days after the treatment. Samples at 5 points were randomly taken for each treatment, 5 square meters were investigated at each point, and the total number of tomato plants and the number of diseased plants at each point were respectively investigated. The rate of diseased plants and efficacy were calculated.

Efficacy (%) = ((Rate of diseased plants of the control - Rate of diseased plants of the treatment) / Rate of diseased plants of the control) x 100

The test results are shown in table 21:

Table 21: Field efficacy test results of compound ZJS178 compounded with thiophanate-methyl against tomato fusarium wilt

| Reagent treatment | Active ingredient content (grams / Chinese acre) | Efficacy % (after 2 doses)* |
|---|---|---|
| Suspension comprising 20 % ZJS178 • thiophanate-methyl | 40 | 82.36[a] |
| Suspension comprising 20 % ZJS178 | 40 | 71.13[b] |
| Wettable powder comprising 50 % thiophanate-methyl | 40 | 52.81c |
| * Different lowercase letters after the same column of data indicate significant differences at the P<0.05 level. | | |

The results in Table 21 show that the compounding of ZJS178 • thiophanate-methyl can effectively prevent and treat tomato fusarium wilt at the same effective dosage, and the efficacy is significantly better than that of single reagents. The test reagent is safe for the test crop.

In summary, the results of laboratory bioassay and field efficacy test show that: the composition of the present invention has reasonable components, prevention and treatment effects and good fungicidal effect, reduced times of administration, and is low in cost of administration. Its activity and fungicidal effect are not a simple superposition of the activities of each ingredient, but a significant synergistic effect. The composition is composed of active ingredients with different mechanisms of action, and the site of action is increased, beneficial to overcome and delay the occurrence of drug resistance of pathogens. There is no obvious adverse effect on the test crops, and the leaf color and growth vigor are normal, with good safety, and meeting the safety requirements of pesticide formulations. The present invention has excellent efficacy against diseases caused by *Fusarium spp.*

**Example 17:** Laboratory toxicity test of compound ZJS178 compounded with azoxystrobin against *F. oxysporum f. sp. lycopersici*

Test object: *F. oxysporum f. sp. lycopersici* isolated from diseased tomatoes from the field. The tested strains were identified by morphology and pathogenicity, and then stored in the laboratory for future use.

Test reagents: compound ZJS178 synthesized by Example 1; azoxystrobin provided by Zhejiang Research Institute of Chemical Industry.

Test method: refer to "Agricultural Industry Standard of the People's Republic of China NY/T 1156.2-2006" mycelial growth rate method. Five dosages of each reagent were set according to the active ingredient content, and the growth inhibition rate of the pathogens was between 10 % and 90 %. The above-mentioned *F. oxysporum f. sp. lycopersici* was inoculated on a PDA medium, and 50 ug/mL salicylhydroxamic acid (SHAM) was added to the culture medium to inhibit the bacteria's bypass respiration. When the colony grew to 2/3 of the culture dish, a fungicidal block at the edge of the colony was made by a punch with a diameter of 5 mm. The fungicidal block was transferred to the center of the pre-prepared drug-containing medium plate using an inoculating needle, and then placed in a 25 °C incubator for 3 days. The diameter of each treated colony was measured with a caliper using a cross method, and the corrected inhibition percentage was calculated. $EC_{50}$ values for each reagent were then calculated using linear regression analysis between

the probability of inhibition values and the log of the series of concentrations, repeated 4 times per treatment. The compound ZJS178 was set as the standard reagent, and the co-toxicity coefficient (CTC) was calculated according to the following formulas.

$$\text{Actual Toxicity Index (ATI)} = (EC_{50} \text{ of standard reagent} / EC_{50} \text{ of test reagent}) \times 100;$$

Theoretical Toxicity Index (TTI) = Standard reagent toxicity index x Percentage of the standard reagent in the mixed combination + Test reagent toxicity index x Percentage of the test reagent in the mixed combination;

$$\text{Co-Toxicity Coefficient (CTC)} = (\text{ATI/TTI}) \times 100\%;$$

A CTC value of less than 80 indicates an antagonistic effect; A CTC value of 80-120 indicates an additive effect; A CTC value of greater than 120 indicates a synergistic effect.

The test results are shown in Table 22.

Table 22: Laboratory toxicity test results of compound ZJS178 compounded with azoxystrobin against *F. oxysporum f. sp. lycopersici*

| Reagent | $EC_{50}$ (μg/ mL) | ATI | TTI | CTC |
|---|---|---|---|---|
| ZJS178 (A) | 0.0461 | 100.00 | / | / |
| Azoxystrobin (B) | 0.8247 | 5.59 | / | / |
| A+B (12: 1) | 0.0522 | 88.31 | 92.74 | 95.23 |
| A+B (9: 1) | 0.05101 | 90.37 | 90.56 | 99.80 |
| A+B (7: 1) | 0.05118 | 90.07 | 88.20 | 102.13 |
| A+B (6: 1) | 0.04687 | 98.36 | 86.51 | 113.69 |
| A+B (4: 1) | 0.0413 | 111.62 | 81.12 | 137.60 |
| A+B (3: 1) | 0.0433 | 106.47 | 76.40 | 139.36 |
| A+B (2: 1) | 0.0455 | 101.32 | 68.53 | 147.85 |
| A+B (1: 1) | 0.0638 | 72.26 | 52.80 | 136.86 |
| A+B (1: 2) | 0.0922 | 50.00 | 37.06 | 134.92 |
| A+B (1: 3) | 0.1133 | 40.69 | 29.19 | 139.38 |
| A+B (1: 4) | 0.1502 | 30.69 | 24.47 | 125.42 |
| A+B (1: 6) | 0.1903 | 24.22 | 19.08 | 126.98 |
| A+B (1: 7) | 0.2553 | 18.06 | 17.39 | 103.83 |
| A+B (1: 9) | 0.3106 | 14.84 | 15.03 | 98.74 |
| A+B (1: 12) | 0.3711 | 12.42 | 12.85 | 96.66 |

As shown in Table 22, when the mass ratio of the compound ZJS178 and azoxystrobin is 4: 1 to 1: 6, the inhibition effect on the growth of *F. oxysporum f. sp. lycopersici* is significantly synergistic. Other ratios achieve additive effects.

**Example 18:** Laboratory toxicity test of compound ZJS178 compounded with pyraclostrobin against *Fusarium moniliforme*

Test object: *Fusarium moniliforme* preserved in a culture room of the laboratory. The bioassay method was referred to the description in Example 17.

Table 23: Laboratory toxicity test results of compound ZJS178 compounded with pyraclostrobin against *Fusarium moniliforme*

| Reagent | $EC_{50}$ (μg/ mL) | ATI | TTI | CTC |
|---|---|---|---|---|
| ZJS178 (A) | 0.6781 | 100.00 | / | / |
| Pyraclostrobin (B) | 4.9852 | 13.61 | / | / |
| A+B (1: 20) | 3.4121 | 19.89 | 17.72 | 112.19 |
| A+B (1: 15) | 3.0678 | 22.12 | 19.01 | 116.35 |
| A+B (1: 12) | 2.6822 | 25.30 | 20.26 | 124.89 |
| A+B (1: 8) | 2.2455 | 30.22 | 23.21 | 130.19 |
| A+B (1: 6) | 1.9855 | 34.17 | 25.95 | 131.68 |
| A+B (1: 4) | 1.5321 | 44.29 | 30.89 | 143.37 |
| A+B (1: 3) | 1.3025 | 52.09 | 35.21 | 147.96 |
| A+B (1: 2) | 1.1034 | 61.49 | 42.41 | 145.00 |
| A+B (1:1) | 0.8322 | 81.53 | 56.81 | 143.53 |
| A+B (2: 1) | 0.6215 | 109.17 | 71.20 | 153.32 |
| A+B (3: 1) | 0.578 | 117.39 | 78.40 | 149.72 |
| A+B (4: 1) | 0.5899 | 115.02 | 82.72 | 139.04 |
| A+B (6: 1) | 0.6021 | 112.69 | 87.66 | 128.55 |
| A+B (8: 1) | 0.6107 | 111.10 | 90.40 | 122.90 |
| A+B (12:1) | 0.6124 | 110.79 | 93.35 | 118.68 |
| A+B (15:1) | 0.6278 | 108.08 | 94.60 | 114.24 |
| A+B (20: 1) | 0.6488 | 104.58 | 95.89 | 109.06 |

As shown in Table 23, when the mass ratio of the compound ZJS178 and pyraclostrobin is 1: 12 to 8: 1, the inhibition effect on the growth of *Fusarium moniliforme* is significantly synergistic. Other ratios achieve additive effects.

**Example 19:** Filed efficacy test

**I. Formulation preparation**

The percentage contents in all formulation ratios were expressed as a mass percentage.

(1) A suspension comprising 40 % ZJS178 • azoxystrobin 30 % of ZJS178, 10 % of azoxystrobin, 2 % of NNO, 2 % of TERSPERSE 2500, 1 % of an emulsifier T-60, 3 % of an agricultural emulsifier 700#, 0.1 % of xanthan gum, 3 % of white carbon black, 5 % of propylene glycol, 0.5 % of formaldehyde, 0.5 % of a silicone defoamer and a balance of deionized water to 100 % were weighed.
According to the formulation ratio, with water as the medium, the active ingredients, dispersant, suspending agent and antifreeze were added to a batching kettle to be mixed well. The mixture was dispersed by ball mill or high-speed shear for 30 min, and then sanded with a sand mill to prepare a suspension.
(2) A suspension comprising 24 % ZJS178 • pyraclostrobin
16 % of ZJS178, 8 % of pyraclostrobin, 2 % of TERSPERSE 2500, 3 % of TERSPERSE 2425, 0.2 % of xanthan gum, 3 % of white carbon black, 5 % of ethylene glycol, 0.3 % of benzoic acid, 0.5 % of a silicone defoamer (product name: s-29 Nanjing Sixin Scientific-Technological Application Research Institute Co., Ltd.), and a balance of deionized water to 100 % were weighed.

According to the formulation ratio, with water as the medium, the active ingredients, dispersant, suspending agent and antifreeze were added to a batching kettle to be mixed well. The mixture was dispersed by ball mill or high-speed shear for 30 min, and then sanded with a sand mill to prepare a suspension.

## II. Field test

### Field Efficacy Test against watermelon fusarium wilt

The prevention and treatment of watermelon fusarium wilt was carried out according to "GB-T 17980.113-2004 Pesticide -- Guidelines for the field efficacy trials (II) -- Part 113: Fungicides against fusarium wilt of cucurbits". The test site was in Dongpu town, Shaoxing city; the soil type was loam; the fertility was medium; and the pH value was neutral. The variety was Zhemi 8. After the watermelon seedlings were transplanted and fixed, the root was irrigated with liquid reagent. See Table 3 for the types and dosages of the reagents. One week after the first application, the root was re-perfused. Fourteen days after treatment, all plants in the plot were investigated for the presence of typical symptoms of fusarium wilt, and the number of diseased plants and the total number of investigated plants were recorded. According to the investigation results, the rate of diseased plants and efficacy were calculated according to the following formulas (1) and (2). The test data were statistically analyzed using Duncan's new multiple range test (DMRT).

$$\text{Rate of diseased plants (\%)} = \text{Diseased plants / Investigated plants x 100} \qquad (1)$$

Reagent efficacy (%) = (Rate of diseased plants in a blank control area - Rate of diseased plants in a reagent treatment area) / Rate of diseased plants in a blank control area x 100 (2) (2)

The test results are shown in table 24:

Table 24: Field efficacy test results of compound ZJS178 compound with azoxystrobin against watermelon fusarium wilt

| Reagent treatment | Active ingredient content (grams / Chinese acre) | Efficacy % (15 days after 2 doses)* |
|---|---|---|
| Suspension comprising 40 % ZJS178 • azoxystrobin | 20 | 85.02[a] |
| Suspension comprising 40 % ZJS178 | 20 | 73.32[b] |
| Granule comprising 1 % azoxystrobin | 20 | 60.18[c] |
| * Different lowercase letters after the same column of data indicate significant differences at the P<0.05 level. | | |

The results in Table 24 show that, at the same effective dosage, the compounding of ZJS178 • azoxystrobin can achieve excellent efficacy on watermelon fusarium wilt, and the efficacy is significantly higher than that of single reagents. The test reagent is safe for the test crop.

### Field efficacy test against bakanal disease of rice

The prevention and treatment of bakanal disease of rice disease was carried out according to the provisions of "GB-T 17980.104-2004 Pesticide -- Guidelines for the field efficacy trials (II)Part 104: Fungicides against bakanal disease of rice". Samples were taken at 5 points in each plot. 100 plants were investigated at each point, and the total number of plants and diseased plants were recorded. Samples were randomly taken at 5 points in each plot before field heading, and 20 clusters were taken at each point. The test site was in Dongpu town, Shaoxing city. The seeds were soaked in a liquid diluted to a certain ratio for 72 h. The soil type was loam; the fertility was medium; and the pH value was neutral. The rice variety was Zhongzao 39 (susceptible variety). Nutritive soil was used for seedling raising. The seedling raising process was carried out in strict accordance with the seedling raising process of mechanical transplanting. The seed quantity and soil fertility of all treatments were consistent. Each treatment used 20 trays, and the seed amount per tray was 150 g. One day before transplanting and before heading, the incidence of rice seedling disease was investigated. Efficacy calculation method:
According to the investigation results, the diseased index and efficacy were calculated according to the following formulas (1) and (2). The test data were statistically analyzed using Duncan's new multiple range test (DMRT).

$$\text{Rate of diseased plants (\%)} = \text{Diseased plants / Investigated plants x 100} \qquad (1)$$

Reagent efficacy (%) = (Rate of diseased plants in a blank control area - Rate of diseased plants in a reagent treatment area) / Rate of diseased plants in a blank control area x 100 (2) (2)

Table 25: Field efficacy test against bakanal disease of rice

| Reagent Name | Dosage (dilution factor) | Before transplanting | | Before heading | |
|---|---|---|---|---|---|
| | | Rate of diseased plants (%) | Efficacy(%) | Rate of diseased plants (%) | Efficacy(%) |
| Suspension comprising 24 % ZJS178 • pyraclostrobin | 3000 | 0.72 | 89.2 | 0.89 | 89.8[a] |
| | 2500 | 0.57 | 91.5 | 0.64 | 92.7[a] |
| | 2000 | 0.33 | 95.0 | 0.33 | 96.2[a] |
| Suspension comprising 25 % ZJS178 | 2000 | 3.13 | 85.6 | 3.94 | 86.1[b] |
| Suspension comprising 25 % pyraclostrobin | 2000 | 0.82 | 87.6 | 1.27 | 85.4[b] |
| * Different lowercase letters after the same column of data indicate significant differences at the P<0.05 level. | | | | | |

The results in Table 25 show that the suspension comprising 24 % ZJS178 • pyraclostrobin can achieve good efficacy against bakanal disease of rice by soaking seeds at a dilution factor of 3000-2000, and the efficacy is 89.8 %-96.2 %, which is significantly better than that of single reagents. The test reagent is safe for the test crop.

In summary, the results of laboratory bioassay and field efficacy test show that: the composition of the present invention has reasonable components, prevention and treatment effects and good fungicidal effect, reduced times of administration, and is low in cost of administration. Its activity and fungicidal effect are not a simple superposition of the activities of each ingredient, but a significant synergistic effect. The composition is composed of active ingredients with different mechanisms of action, and the site of action is increased, beneficial to overcome and delay the occurrence of drug resistance of pathogens. There is no obvious adverse effect on the test crops, and the leaf color and growth vigor are normal, with good safety, and meeting the safety requirements of pesticide formulations. The present invention has excellent efficacy against diseases caused by *Fusarium spp.*

The present invention has excellent efficacy against seed-borne and soil-borne crop diseases caused by *Fusarium spp.*

## Claims

1. A fungicidal composition, **characterized by** comprising as active ingredients a compound ZJS 178 of formula (I) and a triazole fungicide,

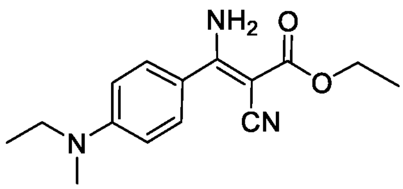

(I).

2. The fungicidal composition of claim 1, **characterized in that** the triazole fungicide is tebuconazole or metconazole.

3. The fungicidal composition of claim 1, **characterized in that** a mass ratio of the compound ZJS178 to the triazole fungicide in the composition is 50:1 to 1:50.

4. The fungicidal composition of claim 3, **characterized in that** the mass ratio of the compound ZJS178 to the triazole fungicide in the composition is 8:1 to 1:8.

5. The fungicidal composition of claim 4, **characterized in that** the mass ratio of the compound ZJS178 to the triazole fungicide in the composition is 2:1 to 1:3.

6. The fungicidal composition of any one of claims 1-5, **characterized in that** the fungicide composition further comprises an auxiliary ingredient required for pesticide formulations, and the mass percentage of active ingredients

in the composition is 1-90 %.

7. The fungicidal composition of claim 6, **characterized in that** the mass percentage of active ingredients is 15-40 %.

8. A use of the fungicidal composition of any one of claims 1-7 in the prevention and treatment of crop diseases caused by *Fusarium spp.*

9. The use of claim 8, **characterized in that** the *Fusarium spp.* comprises *Fusarium graminearum* species complex, *Fusarium fujikuroi* species complex, *Fusarium oxysporum* species complex, and *Fusarium moniliforme.*

10. The use of claim 9, **characterized in that** the crop diseases comprise wheat head blight, bakanal disease of rice, and strawberry fusarium wilt.

11. A highly efficient fungicidal composition, **characterized by** comprising as active ingredients a compound ZJS178 of formula (I) and a succinate dehydrogenase inhibitor fungicide,

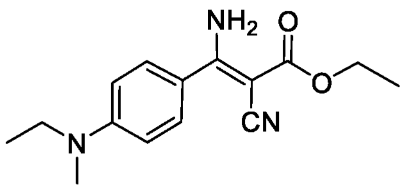

(I).

12. The highly efficient fungicidal composition of claim 11, **characterized in that** a mass ratio of the compound ZJS178 to the succinate dehydrogenase inhibitor fungicide in the composition is 50: 1 to 1: 50.

13. The highly efficient fungicidal composition of claim 11, **characterized in that** the succinate dehydrogenase inhibitor fungicide is pydiflumetofen or penflufen.

14. The highly efficient fungicidal composition of claim 12 or 13, **characterized in that** the mass ratio of the compound ZJS178 to the succinate dehydrogenase inhibitor fungicide in the composition is 9: 1 to 1: 9.

15. The highly efficient fungicidal composition of claim 14, **characterized in that** a preferable mass ratio of the compound ZJS178 to the succinate dehydrogenase inhibitor fungicide in the composition is 7: 1 to 1: 5.

16. The highly efficient fungicidal composition of claim 11, **characterized in that** the mass percentage of the active ingredients in the composition is 10-40 %.

17. The highly efficient fungicidal composition of claim 11, **characterized in that** the composition further comprises a pesticide-acceptable carrier and adjuvant.

18. A use of the highly efficient fungicidal composition of any one of claims 11-17 in the prevention and treatment of crop diseases caused by *Fusarium spp.*

19. The use of claim 18, **characterized in that** the *Fusarium spp.* comprises *Fusarium graminearum* species complex, *Fusarium fujikuroi* species complex, *Fusarium oxysporum* species complex, and *Fusarium moniliforme.*

20. The use of claim 19, **characterized in that** the disease comprises wheat head blight and bakanal disease of rice.

21. A fungicide composition, **characterized by** comprising as active ingredients a compound ZJS178 of formula (I) and a pyrrole fungicide,

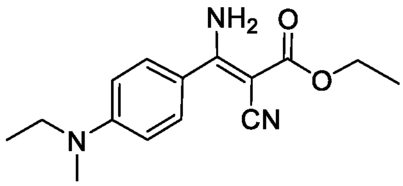

(I).

**22.** The fungicide composition of claim 21, **characterized in that** the pyrrole fungicide is fludioxonil.

**23.** The fungicide composition of claim 21 or 22, **characterized in that** a mass ratio of the compound ZJS178 to the pyrrole fungicide is 50: 1 to 1: 50.

**24.** The fungicide composition of claim 23, **characterized in that** the mass ratio of the compound ZJS178 to the pyrrole fungicide is **11:** 1 to 1: 11.

**25.** The fungicide composition of claim 24, **characterized in that** the mass ratio of the compound ZJS178 to the pyrrole fungicide is 1: 1-3.

**26.** The fungicide composition of claim 21, **characterized in that** the mass percentage of the active ingredients in the composition is 25-40 %.

**27.** The fungicide composition of claim 21, **characterized in that** the composition further comprises a pesticide-acceptable carrier and adjuvant.

**28.** A use of the fungicide composition of any one of claims 21-27 in the prevention and treatment of crop diseases caused by *Fusarium spp.*

**29.** The use of claim 28, **characterized in that** the *Fusarium spp.* comprises *Fusarium pseudograminearum, Fusarium fujikuroi,* and *Fusarium oxysporum.*

**30.** The use of claim 29, **characterized in that** the use comprises treating crop seeds by a seed treatment prepared from the fungicide composition.

**31.** A fungicide composition, **characterized by** comprising as active ingredients a compound ZJS178 of formula (I) and an imidazole fungicide,

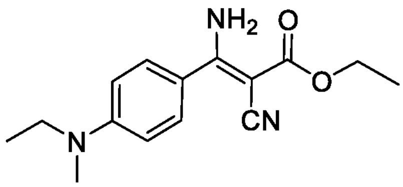

(I).

**32.** The fungicide composition of claim 31, **characterized in that** the imidazole fungicide is at least one selected from the group consisting of prochloraz, carbendazim, prochloraz-manganese chloride complex, or thiophanate-methyl.

**33.** The fungicide composition of claim 31, **characterized in that** a mass ratio of the compound ZJS178 to the imidazole fungicide in the composition is 60:1 to 1:60.

**34.** The fungicide composition of claim 33, **characterized in that** the mass ratio of the compound ZJS178 to the imidazole fungicides in the composition is 20:1 to 1:20.

**35.** The fungicide composition of claim 34, **characterized in that** the mass ratio of the compound ZJS178 to the imidazole fungicides in the composition is 12:1 to 1:12.

**36.** The fungicide composition of claim 35, **characterized in that** the mass ratio of the compound ZJS178 to the imidazole fungicide in the composition is 6:1 to 1:6.

**37.** The fungicide composition of claim 36, **characterized in that** the mass ratio of the compound ZJS178 to the imidazole fungicide in the composition is 3:1 to 1:3.

**38.** The fungicide composition of any one of claims 31-37, **characterized in that** the fungicide composition further comprises an auxiliary ingredient required for pesticide formulations, and the mass percentage of active ingredients in the composition is 0.5-90 %.

**39.** A use of the fungicide composition of any one of claims 31-37 in the prevention and treatment of crop diseases caused by *Fusarium spp.*

**40.** The use of claim 39, **characterized in that** the *Fusarium spp.* comprises *Fusarium graminearum* species complex, *Fusarium fujikuroi* species complex, *Fusarium oxysporum* species complex, and *Fusarium moniliforme.*

**41.** The use of claim 40, **characterized in that** the crop diseases comprise fusarium wilt of cucurbits, tomato fusarium wilt, banana fusarium wilt, cotton fusarium wilt, strawberry fusarium wilt, bakanal disease of rice, and wheat head blight.

**42.** A fungicidal composition, **characterized by** comprising as active ingredients a compound ZJS 178 of formula (I) and a strobilurin fungicide,

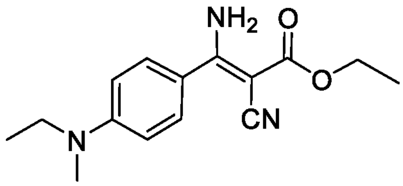

(I).

**43.** The fungicidal composition of claim 42, **characterized in that** the strobilurin fungicide is at least one selected from the group consisting of azoxystrobin, trifloxystrobin, fluoxastrobin, picoxystrobin, pyraclostrobin, and fenaminstrobin.

**44.** The fungicidal composition of claim 42, **characterized in that** a mass ratio of the compound ZJS178 to the strobilurin fungicide in the composition is 60:1 to 1:60.

**45.** The fungicidal composition of claim 44, **characterized in that** the mass ratio of the compound ZJS178 to the strobilurin fungicide in the composition is 20:1-1:20.

**46.** The fungicidal composition of claim 45, **characterized in that** the mass ratio of the compound ZJS178 to the strobilurin fungicide in the composition is **12:1-1:12.**

**47.** The fungicidal composition of claim 46, **characterized in that** the mass ratio of the compound ZJS178 to the strobilurin fungicide in the composition is 6:1 to 1:6.

**48.** The fungicidal composition of claim 47, **characterized in that** the mass ratio of the compound ZJS178 to the strobilurin fungicide in the composition is 3:1 to 1:3.

**49.** The fungicidal composition of any one of claims 42-48, **characterized in that** the fungicide composition further comprises an auxiliary ingredient required for pesticide formulations, and the mass percentage of active ingredients in the composition is 0.5-90 %.

**50.** A use of the fungicidal composition of any one of claims 42-48 in the prevention and treatment of crop diseases caused by *Fusarium spp.*

**51.** The use of claim 50, **characterized in that** the *Fusarium spp.* comprises *Fusarium graminearum* species complex, *Fusarium fujikuroi* species complex, *Fusarium oxysporum* species complex, and *Fusarium moniliforme.*

**52.** The use of claim 51, **characterized in that** the crop diseases comprise fusarium wilt of cucurbits, tomato fusarium wilt, banana fusarium wilt, cotton fusarium wilt, strawberry fusarium wilt, bakanal disease of rice, and wheat head blight.

**INTERNATIONAL SEARCH REPORT**

International application No.
**PCT/CN2022/107593**

**A. CLASSIFICATION OF SUBJECT MATTER**

A01N 37/44(2006.01)i; A01N 43/653(2006.01)i; A01N 43/56(2006.01)i; A01N 43/36(2006.01)i; A01N 43/50(2006.01)i; A01N 43/54(2006.01)i

According to International Patent Classification (IPC) or to both national classification and IPC

**B. FIELDS SEARCHED**

Minimum documentation searched (classification system followed by classification symbols)

A01N

Documentation searched other than minimum documentation to the extent that such documents are included in the fields searched

Electronic data base consulted during the international search (name of data base and, where practicable, search terms used)

WPI, CNPAT, REGISTRY (STN), MARPAT (STN), CAPLUS (STN), CNKI, 万方, WANFANG: 江苏省农药研究所, 浙江大学, 沈阳中化农药, 浙江省化工研究院, 苯基丙烯酸乙酯, 氰基, 氨基, 氰烯菌酯, 镰刀菌, 稻瘟病, 赤霉病, 杀菌剂, 戊唑醇, 叶菌唑, 氟唑菌酰羟胺, 氟唑菌苯胺, 咯菌腈, 咪鲜胺, 多鲜灵, 甲基硫菌灵, 嘧菌酯, 肟菌酯, 吡唑醚菌酯, cyanoacrylate, cyanoestrobin, fungicide, fungicidal, fusarium, composition, 结构式检索, structural formula search

**C. DOCUMENTS CONSIDERED TO BE RELEVANT**

| Category* | Citation of document, with indication, where appropriate, of the relevant passages | Relevant to claim No. |
|---|---|---|
| A | CN 1559210 A (JIANGSU PESTICIDE RESEARCH INSTITUTE CO., LTD.) 05 January 2005 (2005-01-05)<br>claims 1-7 | 1-52 |
| A | CN 106962363 A (NANJING AGRICULTURAL UNIVERSITY) 21 July 2017 (2017-07-21)<br>claim 1, and abstract | 1-52 |
| A | CN 112825859 A (SHENYANG SINOCHEM AGROCHEMICALS R&D CO., LTD.) 25 May 2021 (2021-05-25)<br>claims 1-3 and 10, and description, page 63, table 58 | 1-52 |
| A | CN 1317483 A (JIANGSU PESTICIDE RESEARCH INSTITUTE CO., LTD.) 17 October 2001 (2001-10-17)<br>claim 1, and description, page 7 | 1-52 |
| A | CN 109879834 A (JIANGSU PESTICIDE RESEARCH INSTITUTE CO., LTD.) 14 June 2019 (2019-06-14)<br>claims 1 and 10 | 1-52 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 December 2022** | **19 December 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.
**PCT/CN2022/107593**

| C. DOCUMENTS CONSIDERED TO BE RELEVANT | | |
|---|---|---|
| Category* | Citation of document, with indication, where appropriate, of the relevant passages | Relevant to claim No. |
| A | CN 109867623 A (JIANGSU PESTICIDE RESEARCH INSTITUTE CO., LTD.) 11 June 2019 (2019-06-11)<br>claim 1, and description, pages 7-8 | 1-52 |

Form PCT/ISA/210 (second sheet) (January 2015)

**INTERNATIONAL SEARCH REPORT**
**Information on patent family members**

International application No.
**PCT/CN2022/107593**

| Patent document cited in search report | | | Publication date (day/month/year) | Patent family member(s) | | | Publication date (day/month/year) |
|---|---|---|---|---|---|---|---|
| CN | 1559210 | A | 05 January 2005 | None | | | |
| CN | 106962363 | A | 21 July 2017 | None | | | |
| CN | 112825859 | A | 25 May 2021 | CN | 114903046 | A | 16 August 2022 |
| | | | | WO | 2021104171 | A1 | 03 June 2021 |
| CN | 1317483 | A | 17 October 2001 | None | | | |
| CN | 109879834 | A | 14 June 2019 | None | | | |
| CN | 109867623 | A | 11 June 2019 | None | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **OIKI et al.** Wide distribution of resistance to the fungicides fludioxonil and iprodione in Penicillium species. *PLOS ONE*, 2022, vol. 17 (1)
- **DOWLING et al.** Characterization of high fludioxonil resistance in Botrytis cinerea isolates from calibrachoa flowers. *Phytopathology*, 2021, vol. 111 (3), 478-484
- **WEN et al.** Biological and molecular characterizations of field fludioxonil-resistant isolates of Fusarium graminearum. *Pesticide biochemistry and physiology*, 2022, 184
- *CHEMICAL ABSTRACTS*, 67710-36-5